# EUROPEAN PATENT APPLICATION

(11) **EP 4 465 667 A1**
(43) Date of publication of application: **20.11.2024**
(21) Application number: 23766122.8
(22) Date of filing: 10.03.2023
(51) Int. Cl.: H04W 4/50

(54) **OFFLINE DEVICE CONTROL METHOD AND RELATED APPARATUS**

(30) Priority: 11.03.2022 CN 202210238563; 01.06.2022 CN 202210618803
(71) Applicant: Huawei Technologies Co., Ltd., Shenzhen, Guangdong 518129 (CN)
(72) Inventor: LIU, Zheng, Shenzhen, Guangdong 518129 (CN); LI, Yong, Shenzhen, Guangdong 518129 (CN); WU, Zhonggang, Shenzhen, Guangdong 518129 (CN); HU, Shibang, Shenzhen, Guangdong 518129 (CN)
(74) Representative: Pfenning, Meinig & Partner mbB
(86) International application number: PCT/CN2023/080697
(87) International publication number: WO 2023/169545

(57) **Abstract**

This application provides an offline device control method and a related apparatus, which are applied to an offline device control system. The system includes a second electronic device, a third electronic device, and a server, and the second electronic device is in an offline state. The method includes: The server obtains a first message, where the first message indicates the second electronic device to execute a first instruction; the second electronic device broadcasts a first offline message via a near field communication module; the third electronic device obtains the first offline message; the third electronic device sends a second message to the server in response to the first offline message; the server sends a third message to the third electronic device after receiving the second message, where the third message indicates the second electronic device to execute the first instruction; the third electronic device sends the third message to the second electronic device; and the second electronic device executes the first instruction based on the third message. In this way, an offline device may be controlled to execute an offline instruction, to avoid data leakage and data loss, and protect user privacy security.

## Description

This application claims priority to Chinese Patent Application No. 202210238563.9, filed with the China National Intellectual Property Administration on March 11, 2022 and entitled "METHOD FOR ENABLING MULTIPLE SERVICES AFTER POWER-OFF", which is incorporated herein by reference in its entirety. This application claims priority to Chinese Patent Application No. 202210618803.8, filed with the China National Intellectual Property Administration on June 1, 2022 and entitled "OFFLINE DEVICE CONTROL METHOD AND RELATED APPARATUS", which is incorporated herein by reference in its entirety.

### TECHNICAL FIELD

This application relates to the field of electronic technologies, and in particular, to an offline device control method and a related apparatus.

### BACKGROUND

After a mobile device like a notebook computer, a tablet, or a mobile phone is lost, if the mobile device stores important data of a user, there is a risk of privacy leakage. Currently, to cope with device loss, an electronic device may be configured with a device search function. For two devices that log in to a same account, the user may view, on one device, a location of the other device, and may control the other device to execute an instruction like screen locking, to avoid important data leakage and protect user privacy security.

However, only when a lost device is online (for example, connected to a network), the user can receive an instruction of another device to which a same account is logged in. If the lost device is always offline (for example, disconnected from the network), the user cannot control the lost device to execute the instruction. Especially, a device like a notebook computer that cannot be connected to a cellular network may remain offline after being lost.

### SUMMARY

This application provides an offline device control method and a related apparatus, to control an offline device to execute an offline instruction, to avoid data leakage and data loss, and protect user privacy security.

According to a first aspect, this application provides an offline device control method, applied to an offline device control system, where the system includes a second electronic device, a third electronic device, and a server, and the second electronic device is in an offline state. The method includes: The server obtains a first message, where the first message indicates the second electronic device to execute a first instruction; the second electronic device broadcasts a first offline message via a near field communication module; the third electronic device obtains the first offline message; the third electronic device sends a second message to the server in response to the first offline message; the server sends a third message to the third electronic device after receiving the second message, where the third message indicates the second electronic device to execute the first instruction; the third electronic device sends the third message to the second electronic device; and the second electronic device executes the first instruction based on the third message.

In embodiments of this application, a device may broadcast an offline message when the device is offline. After receiving the offline message, a nearby online device near the offline device may report the message to the server, to indicate that the nearby device is capable of assisting the offline device in transmitting a message to the server. In this way, the server may send a message to the offline device via the nearby device, to control the offline device to execute a specific task, thereby avoiding data loss and data leakage of the lost offline device and protecting user privacy.

In an implementation, the system further includes a first electronic device, and before the server obtains a first message, the method further includes: The first electronic device receives a first input operation of a user; and the first electronic device sends the first message to the server in response to the first input operation. In embodiments of this application, when the device is offline, the user may also use another electronic device to trigger an offline instruction for the offline device, to control the offline device to execute the specific task.

In an implementation, before the first electronic device receives a first input of a user, the method further includes: The first electronic device displays a first interface of a first application, where the first interface includes a first function control, and the first function control is used to trigger the first electronic device to generate the first instruction used to control the second electronic device; and that the first electronic device receives a first input of a user includes: The first electronic device receives the first input operation of the user for the first function control, where the first input operation includes one or more operations. In embodiments of this application, when the device is offline, the user may also send an offline instruction for the offline device to the server by using a specific application (for example, a Find Device application) installed on another electronic device, to control the offline device to execute the specific task, thereby effectively improving user experience.

In an implementation, the first interface further includes a first identifier of the second electronic device, and the first identifier indicates that the second electronic device is currently in the offline state. In embodiments of this application, the user may check, by using the specific application (for example, the Find Device application) installed on the electronic device, whether the another device is in the offline state. In this way, the user can obtain the offline state of the another device in time, and perform offline control on the offline device in time by using the offline instruction, to avoid data loss and data leakage of the offline device, thereby effectively improving user experience.

In an implementation, the second message indicates that the third electronic device is capable of assisting the offline second electronic device in message transmission. In embodiments of this application, the server may determine, based on the message uploaded by the nearby device of the offline device, that the offline instruction may be sent to the offline device via the nearby device, to implement offline control on the offline device.

In an implementation, the second message indicates an offline location of the second electronic device that is obtained by the third electronic device. Optionally, the offline location may be the location of the nearby device that is obtained by a positioning module of the nearby device. Because the nearby device is near the offline device, a location of the nearby device may be regarded as the current offline location of the offline device. Optionally, the offline location may alternatively be the current location of the offline device that is obtained by the nearby device through a near field positioning technology by using the location of the nearby device as a reference location. In embodiments of this application, even if the device is offline, the server and the first electronic device that triggers the offline instruction may learn the location of the offline device.

In an implementation, the method further includes: The second electronic device sends a fourth message via the near field communication module after executing the first instruction, where the fourth message indicates that the second electronic device has executed the first instruction; the third electronic device receives the fourth message; the third electronic device sends a fifth message to the server, where the fifth message indicates that the second electronic device has executed the first instruction; and the server sends a sixth message to the first electronic device, where the sixth message indicates that the second electronic device has executed the first instruction. In embodiments of this application, after executing the offline instruction, the offline device may feed back a confirmation message to the first electronic device that triggers the offline instruction, so that the first electronic device learns in time whether control on the offline device is successfully implemented.

In an implementation, the method further includes: The first electronic device displays first prompt information in response to the first input operation, where the first prompt information is used to prompt that the offline second electronic device is being indicated to execute the first instruction. In embodiments of this application, the user can learn a control progress on the offline device in time by using the foregoing prompt information, thereby effectively improving user experience.

In an implementation, the method further includes: After receiving the sixth message, the first electronic device displays second prompt information based on the sixth message, where the second prompt information is used to prompt that the second electronic device has executed the first instruction. In embodiments of this application, the user can learn a control result on the offline device in time by using the foregoing prompt information, thereby effectively improving user experience.

In an implementation, the first instruction is used to implement one or more of the following operations: data erasure, data encryption, data backup, screen locking, display of preset lock screen information, and playing of preset audio. An operation that can be implemented by using the first instruction is not specifically limited in embodiments of this application.

In an implementation, the first input operation includes a second input operation, a third input operation, and a fourth input operation; and that the first electronic device receives a first input operation of a user includes: The first electronic device receives the second input operation performed on the first function control; the first electronic device displays an OK control and at least two file type options in response to the second input operation, where the at least two file type options include a first option; the first electronic device receives the third input operation performed on a first option; and the first electronic device receives the fourth input operation performed on the OK control, where the first instruction is used to implement one or more of data protection operations such as data erasure, data encryption, and data backup, the first instruction further includes a type of a file for which the data protection operation is performed, and the type of the file for which the data protection operation is performed includes a file type corresponding to the first option. In embodiments of this application, the user may select a type of a file for which data protection needs to be performed, to meet diversified requirements of the user, and effectively improve user experience.

In an implementation, the first instruction is used to implement one or more of the data protection operations such as data erasure, data encryption, and data backup, and after the second electronic device executes the first instruction based on the third message, the method further includes: The second electronic device displays third prompt information, where the third prompt information is used to prompt that the second electronic device has executed the first instruction. In embodiments of this application, after executing an offline instruction from another device, the offline device may display prompt information to prompt the user that data erasure, data encryption, or data backup has been performed, thereby effectively improving user experience.

In an implementation, that the third electronic device sends the third message to the second electronic device includes: After receiving the third message, the third electronic device sends the third message to the second electronic device via the near field communication module when obtaining, through scanning, a second offline message broadcast by the second electronic device. In embodiments of this application, when the nearby device approaches the offline device again, the nearby device may send a message corresponding to the offline instruction to the offline device. In this way, the offline device may be controlled to execute the offline instruction provided that there is an online nearby device near the offline device.

In an implementation, before the first electronic device receives a first input of a user, the method further includes: The first electronic device logs in to the first account of the first application; the second electronic device logs in to the first account of the first application; and the first electronic device establishes a binding relationship with the second electronic device based on the first account of the first application. In embodiments of this application, the user may bind one or more other devices in advance by using a specific application (for example, a Find Device application) on the first electronic device. In this way, even when another device is offline, the offline instruction may be triggered by using the first electronic device, to control a bound offline device.

In an implementation, the first electronic device and the second electronic device hold a first key, and the first key is used for mutual identity authentication between the first electronic device and the second electronic device; the second electronic device and the server hold a second key, and the second key is used for mutual identity authentication between the second electronic device and the server; and the first electronic device and the server hold a third key, and the third key is used for mutual identity authentication between the first electronic device and the server. The first message includes a second ciphertext, where the second ciphertext is generated after the first electronic device encrypts the first instruction sequentially by using the first key and the third key; the third message includes a third ciphertext, where the third ciphertext is generated after the server decrypts the second ciphertext by using the third key and then encrypts the second ciphertext by using the second key; and the first instruction is obtained after the second electronic device decrypts the third ciphertext by using the second key and the first key. In embodiments of this application, in an offline device control process, the offline instruction is encrypted and transmitted between every two devices by using a specific key for mutual identity authentication. In this way, a malicious device can be prevented from forging and tampering with the offline instruction, thereby ensuring security of offline device control.

In an implementation, the fourth message and the fifth message include a fourth ciphertext of the confirmation message, the fourth ciphertext is generated after the second electronic device encrypts the confirmation message by using the second key, and the confirmation message indicates that the second electronic device has executed the first instruction; and the sixth message includes the confirmation message, and the confirmation message is obtained after the server decrypts the fourth ciphertext by using the second key. In embodiments of this application, in the offline device control process, the confirmation message is encrypted and transmitted between devices by using the specific key for mutual identity authentication. In this way, the malicious device can be prevented from forging and tampering with the confirmation message, thereby ensuring security of offline device control.

In an implementation, the fourth message and the fifth message include a fourth ciphertext of the confirmation message, the fourth ciphertext is generated after the second electronic device encrypts the confirmation message sequentially by using the first key and the second key, and the confirmation message indicates that the second electronic device has executed the first instruction; the sixth message includes a fifth ciphertext of the confirmation message, and the fifth ciphertext is generated after the server decrypts the fourth ciphertext by using the second key and then encrypts the fourth ciphertext by using the third key; and the method further includes: After receiving the sixth message sent by the server, the first electronic device decrypts the fifth ciphertext sequentially by using the third key and the first key, to obtain the confirmation message. In embodiments of this application, in the offline device control process, the confirmation message is encrypted and transmitted between devices by using the specific key for mutual identity authentication. In this way, the malicious device can be prevented from forging and tampering with the confirmation message, thereby ensuring security of offline device control.

In an implementation, before receiving the first input operation of the user, the first electronic device establishes the binding relationship with the second electronic device, where the first key, the second key, and the third key are generated during binding between the first electronic device and the second electronic device; and the server stores a first correspondence between a second device identifier of the second electronic device and the second key, and a second correspondence between a first device identifier of the first electronic device and the third key. In embodiments of this application, when the first electronic device and the second electronic device are bound, the first electronic device, the second electronic device, and the server may negotiate with each other about a key for identity authentication in advance, to encrypt and transmit a subsequent offline instruction and/or a confirmation message, thereby ensuring security of offline device control.

In an implementation, a fourth key is further generated during binding between the first electronic device and the second electronic device, and both the first electronic device and the second electronic device hold the fourth key; the first message further includes first indication information of a derived key of the fourth key and the second device identifier of the second electronic device; after the server receives the first message, the server stores a third correspondence between the second ciphertext, the first indication information, and the second device identifier based on the first message; the first offline message further includes the derived key of the fourth key; the second message further includes second indication information of the derived key of the fourth key; and before the server sends a third message to the third electronic device, the method further includes: The server matches the first indication information against the second indication information; and when the first indication information successfully matches the second indication information, the server generates the third ciphertext based on the second ciphertext corresponding to the first indication information. Optionally, the indication information of the derived key may be the derived key or a hash value of the derived key. In embodiments of this application, in an offline control process, a message transmitted between the offline device and the nearby device may not carry device information (for example, a device identifier) of the offline device, but implicitly indicate the offline device by using the indication information of the derived key. In this way, the offline device can be prevented from being tracked, and the malicious device can be prevented from using device information to forge and tamper with the message from the offline device, thereby ensuring security of offline control.

In an implementation, that the server generates the third ciphertext based on the second ciphertext corresponding to the first indication information includes: determining, based on the third correspondence, that a device identifier of a target device corresponding to the first indication information is the second device identifier of the second electronic device; determining, based on the first correspondence, the third key used for identity authentication of the first electronic device; and determining, based on the second correspondence, the second key used for identity authentication of the second electronic device; and the server decrypts the second ciphertext by using the third key, to obtain the decrypted first ciphertext, and then encrypts the first ciphertext by using the second key, to obtain the encrypted third ciphertext.

In an implementation, the third message further includes the first indication information of the derived key of the fourth key; and after the third electronic device receives the third message, the method further includes: The third electronic device obtains, through scanning, the second offline message broadcast by the second electronic device, where the second offline message includes the derived key of the fourth key; and that the third electronic device sends the third message to the second electronic device includes: the third electronic device sends the third message to the second electronic device via the near field communication module if indication information of the derived key of the fourth key in the second offline message successfully matches the first indication information.

In an implementation, during binding between the first electronic device and the second electronic device, the first electronic device and the second electronic device separately generate the first key based on a preset algorithm, the second electronic device and the server separately generate the second key based on the preset algorithm, and the first electronic device and the server separately generate the third key based on the preset algorithm.

According to a second aspect, this application provides an offline device control method, applied to a server, including: The server obtains a first message, where the first message indicates a second electronic device to execute a first instruction; the server receives a second message sent by a third electronic device, where the second message is sent after the third electronic device obtains, through scanning via a near field communication module, a first offline message broadcast by the second electronic device, and the first offline message is broadcast when the second electronic device is in an offline state; and the server sends a third message to the offline second electronic device via the third electronic device after receiving the second message, where the third message indicates the second electronic device to execute the first instruction.

In embodiments of this application, a device may broadcast an offline message when the device is offline. After receiving the offline message, a nearby online device near the offline device may report the message to the server, to indicate that the nearby device is capable of assisting the offline device in transmitting a message to the server. In this way, the server may send a message to the offline device via the nearby device, to control the offline device to execute a specific task, thereby avoiding data loss and data leakage of the lost offline device and protecting user privacy.

In an implementation, that the server obtains a first message includes: The server receives the first message sent by a first electronic device. In embodiments of this application, when the device is offline, the user may also use another electronic device to trigger an offline instruction for the offline device, to control the offline device to execute the specific task.

In an implementation, the second message indicates that the third electronic device is capable of assisting the offline second electronic device in message transmission. In embodiments of this application, the server may determine, based on the message uploaded by the nearby device of the offline device, that the offline instruction may be sent to the offline device via the nearby device, to implement offline control on the offline device.

In an implementation, the second message indicates an offline location of the second electronic device that is obtained by the third electronic device. Optionally, the offline location may be the location of the nearby device that is obtained by a positioning module of the nearby device. Because the nearby device is near the offline device, a location of the nearby device may be regarded as the current offline location of the offline device. Optionally, the offline location may also be the current location of the offline device that is obtained by the nearby device through a near field positioning technology by using the location of the nearby device as a reference location. In embodiments of this application, even if the device is offline, the server and the first electronic device that triggers the offline instruction may learn the location of the offline device.

In an implementation, the first instruction is used to implement one or more of the following operations: data erasure, data encryption, data backup, screen locking, display of preset lock screen information, and playing of preset audio. An operation that can be implemented by using the first instruction is not specifically limited in embodiments of this application.

In an implementation, when the first instruction is used to implement one or more of data protection operations such as data erasure, data encryption, and data backup, the first instruction includes a type of a file for which the data protection operation is performed. In embodiments of this application, the user may select a type of a file for which data protection needs to be performed, to meet diversified requirements of the user, and effectively improve user experience.

In an implementation, before the server obtains a first message, the method further includes: The server receives a binding request of the first electronic device and/or the second electronic device, where the binding request is used to request to establish a binding relationship between the first electronic device and the second electronic device based on a first account of a first application, and both the first electronic device and the second electronic device log in to the first account. In embodiments of this application, the user may bind one or more other devices in advance by using a specific application (for example, a Find Device application) on the first electronic device. In this way, even when another device is offline, the offline instruction may be triggered by using the first electronic device, to control a bound offline device.

In an implementation, the first electronic device and the second electronic device hold a first key, and the first key is used for mutual identity authentication between the first electronic device and the second electronic device; the second electronic device and the server hold a second key, and the second key is used for mutual identity authentication between the second electronic device and the server; and the first electronic device and the server hold a third key, and the third key is used for mutual identity authentication between the first electronic device and the server. The first message includes a second ciphertext, where the second ciphertext is generated after the first electronic device encrypts the first instruction sequentially by using the first key and the third key; the third message includes a third ciphertext, where the third ciphertext is generated after the server decrypts the second ciphertext by using the third key and then encrypts the second ciphertext by using the second key; and the first instruction is obtained after the second electronic device decrypts the third ciphertext by using the second key and the first key. In embodiments of this application, in an offline device control process, the offline instruction is encrypted and transmitted between every two devices by using a specific key for mutual identity authentication. In this way, a malicious device can be prevented from forging and tampering with the offline instruction, thereby ensuring security of offline device control.

In an implementation, the method further includes: The server receives a fifth message sent by the third electronic device, where the fifth message is sent after the third electronic device receives, via the near field communication module, a fourth message sent by the second electronic device, and the fourth message and the fifth message indicate that the second electronic device has executed the first instruction; and the server sends a sixth message to the first electronic device, where the sixth message indicates that the second electronic device has executed the first instruction. In embodiments of this application, after executing the offline instruction, the offline device may feed back a confirmation message to the first electronic device that triggers the offline instruction, so that the first electronic device learns in time whether control on the offline device is successfully implemented.

In an implementation, the fourth message and the fifth message include a fourth ciphertext of the confirmation message, the fourth ciphertext is generated after the second electronic device encrypts the confirmation message by using the second key, and the confirmation message indicates that the second electronic device has executed the first instruction; and the sixth message includes the confirmation message, and the confirmation message is obtained after the server decrypts the fourth ciphertext by using the second key. In embodiments of this application, in the offline device control process, the confirmation message is encrypted and transmitted between devices by using the specific key for mutual identity authentication. In this way, the malicious device can be prevented from forging and tampering with the confirmation message, thereby ensuring security of offline device control.

In an implementation, the fourth message and the fifth message include a fourth ciphertext of the confirmation message, the fourth ciphertext is generated after the second electronic device encrypts the confirmation message sequentially by using the first key and the second key, and the confirmation message indicates that the second electronic device has executed the first instruction; the sixth message includes a fifth ciphertext of the confirmation message, and the fifth ciphertext is generated after the server decrypts the fourth ciphertext by using the second key and then encrypts the fourth ciphertext by using the third key; and the confirmation message obtained by the first electronic device is obtained after the first electronic device decrypts the fifth ciphertext by using the third key and the first key. In embodiments of this application, in the offline device control process, the confirmation message is encrypted and transmitted between devices by using the specific key for mutual identity authentication. In this way, the malicious device can be prevented from forging and tampering with the confirmation message, thereby ensuring security of offline device control.

In an implementation, before the server obtains the first message, the first electronic device establishes the binding relationship with the second electronic device, where the first key, the second key, and the third key are generated during binding between the first electronic device and the second electronic device; and the server stores a first correspondence between a device identifier of the second electronic device and the second key, and a second correspondence between a device identifier of the first electronic device and the third key. In embodiments of this application, when the first electronic device and the second electronic device are bound, the first electronic device, the second electronic device, and the server may negotiate with each other about a key for identity authentication in advance, to encrypt and transmit a subsequent offline instruction and/or a confirmation message, thereby ensuring security of offline device control.

In an implementation, a fourth key is further generated during binding between the first electronic device and the second electronic device, and both the first electronic device and the second electronic device hold the fourth key; the first message further includes first indication information of a derived key of the fourth key and the second device identifier of the second electronic device; after the server obtains the first message, the server stores a third correspondence between the second ciphertext, the first indication information, and the device identifier of the second electronic device based on the first message; the first offline message further includes the derived key of the fourth key; the second message further includes second indication information of the derived key of the fourth key; and before the server sends the third message to the offline second electronic device via the third electronic device, the method further includes: The server matches the first indication information against the second indication information; and when the first indication information successfully matches the second indication information, the server generates the third ciphertext based on the second ciphertext corresponding to the first indication information. Optionally, the indication information of the derived key may be the derived key or a hash value of the derived key. In embodiments of this application, in an offline control process, a message transmitted between the offline device and the nearby device may not carry device information (for example, a device identifier) of the offline device, but implicitly indicate the offline device by using the indication information of the derived key. In this way, the offline device can be prevented from being tracked, and the malicious device can be prevented from using device information to forge and tamper with the message from the offline device, thereby ensuring security of offline control.

In an implementation, that the server generates the third ciphertext based on the second ciphertext corresponding to the first indication information includes: determining, based on the third correspondence, that a device identifier of a target device corresponding to the first indication information is the second device identifier of the second electronic device; determining, based on the first correspondence, the third key used for identity authentication of the first electronic device; and determining, based on the second correspondence, the second key used for identity authentication of the second electronic device; and the server decrypts the second ciphertext by using the third key, to obtain the decrypted first ciphertext, and then encrypts the first ciphertext by using the second key, to obtain the encrypted third ciphertext.

According to a third aspect, this application provides an offline device control method, applied to a second electronic device in an offline state, where the method includes: When the second electronic device is in the offline state, the second electronic device broadcasts a first offline message via a near field communication module; the second electronic device receives a third message sent by a server via a nearby online third electronic device, where the third message is sent by the server after obtaining a second message of the third electronic device and the first message, the second message is sent by the third electronic device after receiving the first offline message, and the first message and the third message indicate the second electronic device to execute the first instruction; and the second electronic device executes the first instruction based on the third message.

In embodiments of this application, a device may broadcast an offline message when the device is offline. After receiving the offline message, a nearby online device near the offline device may report the message to the server, to indicate that the nearby device is capable of assisting the offline device in transmitting a message to the server. In this way, the server may send a message to the offline device via the nearby device, to control the offline device to execute a specific task, thereby avoiding data loss and data leakage of the lost offline device and protecting user privacy.

In an implementation, the first message is sent by a first electronic device to the server. In embodiments of this application, when the device is offline, the user may also use another electronic device to trigger an offline instruction for the offline device, to control the offline device to execute the specific task.

In an implementation, the second message indicates that the third electronic device is capable of assisting the offline second electronic device in message transmission. In embodiments of this application, the server may determine, based on the message uploaded by the nearby device of the offline device, that the offline instruction may be sent to the offline device via the nearby device, to implement offline control on the offline device.

In an implementation, the second message indicates an offline location of the second electronic device that is obtained by the third electronic device. In embodiments of this application, even if the device is offline, the server and the first electronic device that triggers the offline instruction may learn the location of the offline device.

In an implementation, the method further includes: The second electronic device sends a seventh message to the server via the third electronic device after executing the first instruction, where the seventh message indicates that the second electronic device has executed the first instruction. In embodiments of this application, after executing the offline instruction, the offline device may feed back a confirmation message to the first electronic device that triggers the offline instruction, so that the first electronic device learns in time whether control on the offline device is successfully implemented.

In an implementation, the first instruction is used to implement one or more of the following operations: data erasure, data encryption, data backup, screen locking, display of preset lock screen information, and playing of preset audio. An operation that can be implemented by using the first instruction is not specifically limited in embodiments of this application.

In an implementation, when the first instruction is used to implement one or more of data protection operations such as data erasure, data encryption, and data backup, the first instruction includes a type of a file for which the data protection operation is performed. In embodiments of this application, the user may select a type of a file for which data protection needs to be performed, to meet diversified requirements of the user, and effectively improve user experience.

In an implementation, the first instruction is used to implement one or more of the data protection operations such as data erasure, data encryption, and data backup, and after the second electronic device executes the first instruction based on the third message, the method further includes: The second electronic device displays third prompt information, where the third prompt information is used to prompt that the second electronic device has executed the first instruction.

In an implementation, before broadcasting a first offline message via a near field communication module, the method further includes: The second electronic device logs in to a first account of a first application; and the second electronic device establishes a binding relationship with the first electronic device based on the first account of the first application. In embodiments of this application, the user may bind one or more other devices in advance by using a specific application (for example, a Find Device application) on the first electronic device. In this way, even when another device is offline, the offline instruction may be triggered by using the first electronic device, to control a bound offline device.

In an implementation, the first electronic device and the second electronic device hold a first key, and the first key is used for mutual identity authentication between the first electronic device and the second electronic device; the second electronic device and the server hold a second key, and the second key is used for mutual identity authentication between the second electronic device and the server; and the first electronic device and the server hold a third key, and the third key is used for mutual identity authentication between the first electronic device and the server. The first message includes a second ciphertext, where the second ciphertext is generated after the first electronic device encrypts the first instruction sequentially by using the first key and the third key; the third message includes a third ciphertext, where the third ciphertext is generated after the server decrypts the second ciphertext by using the third key and then encrypts the second ciphertext by using the second key; and the first instruction is obtained after the second electronic device decrypts the third ciphertext by using the second key and the first key. In embodiments of this application, in an offline device control process, the offline instruction is encrypted and transmitted between every two devices by using a specific key for mutual identity authentication. In this way, a malicious device can be prevented from forging and tampering with the offline instruction, thereby ensuring security of offline device control.

In an implementation, the seventh message includes a fourth ciphertext of the confirmation message, where the fourth ciphertext is generated after the second electronic device performs encryption by using the second key, or the fourth ciphertext is generated after the second electronic device performs encryption by using the second key and the first key, the second key is used by the server to verify that the ciphertext of the confirmation message is from the second electronic device, and the first key is used by the first electronic device to verify that the ciphertext of the confirmation message is from the second electronic device. In embodiments of this application, in the offline device control process, the confirmation message is encrypted and transmitted between devices by using the specific key for mutual identity authentication. In this way, the malicious device can be prevented from forging and tampering with the confirmation message, thereby ensuring security of offline device control.

In an implementation, before broadcasting a first offline message via a near field communication module, the first electronic device establishes the binding relationship with the second electronic device, where the first key, the second key, and the third key are generated during binding between the first electronic device and the second electronic device. In embodiments of this application, when the first electronic device and the second electronic device are bound, the first electronic device, the second electronic device, and the server may negotiate with each other about a key for identity authentication in advance, to encrypt and transmit a subsequent offline instruction and/or a confirmation message, thereby ensuring security of offline device control.

According to a fourth aspect, this application provides an electronic device, including one or more processors and one or more memories. The one or more memories are coupled to the one or more processors. The one or more memories are configured to store computer program code. The computer program code includes computer instructions, and when the one or more processors execute the computer instructions, the electronic device is enabled to perform the offline device control method according to any one of the possible implementations in the first aspect, the second aspect, or the third aspect.

According to a fifth aspect, an embodiment of this application provides a computer storage medium, including computer instructions. When the computer instructions are run on an electronic device, the electronic device is enabled to perform the offline device control method according to any one of the possible implementations in the first aspect, the second aspect, or the third aspect.

According to a sixth aspect, an embodiment of this application provides a computer program product. When the computer program product runs on a computer, the computer is enabled to perform the offline device control method according to any one of the possible implementations in the first aspect, the second aspect, or the third aspect.

### BRIEF DESCRIPTION OF DRAWINGS

FIG. 1 is a diagram of a system architecture of a communication system according to an embodiment of this application;
FIG. 2 is a diagram of a structure of an electronic device according to an embodiment of this application;
FIG. 3 is a diagram of a structure of a cloud server according to an embodiment of this application;
FIG. 4A to FIG. 4D show related user interfaces of a Find Device app according to an embodiment of this application;
FIG. 5A to FIG. 5H show related user interfaces for pairing and binding for device search according to an embodiment of this application;
FIG. 6A to FIG. 6E show related user interfaces for controlling an offline device according to an embodiment of this application;
FIG. 7A to FIG. 7L show related user interfaces for controlling an offline device according to an embodiment of this application;
FIG. 8A-1 and FIG. 8A-2 are a schematic flowchart of an offline device control method according to an embodiment of this application;
FIG. 8B-1 to FIG. 8B-3 are a schematic flowchart of an offline device control method according to an embodiment of this application;

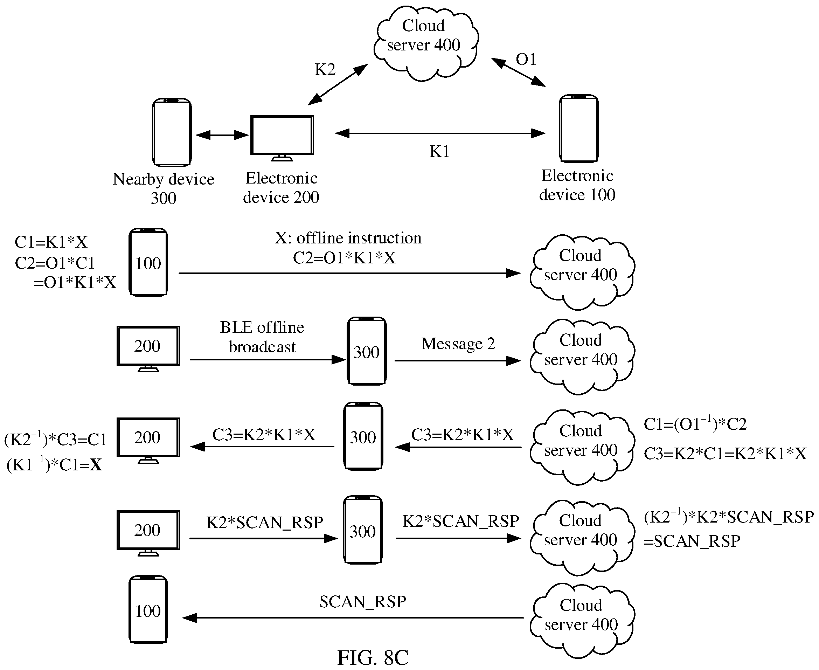

FIG. 8C is a diagram of information transmission according to an embodiment of this application;

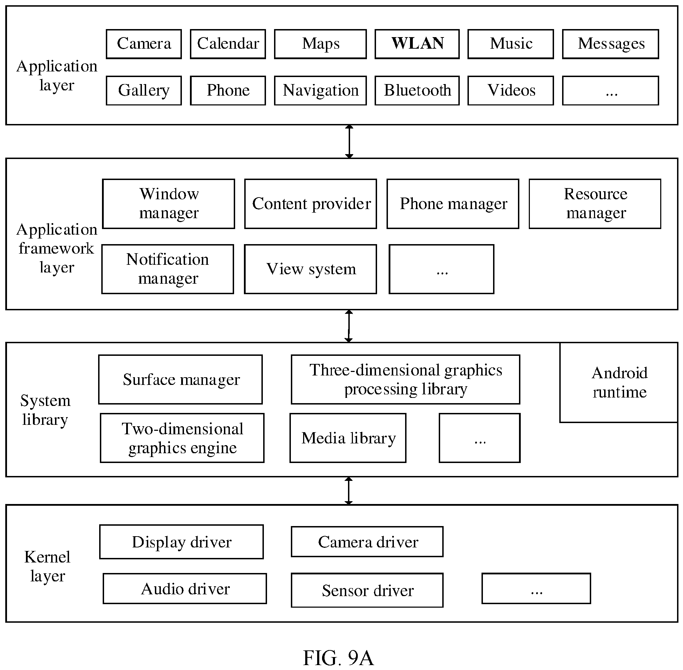

FIG. 9A is a diagram of a software structure of an electronic device according to an embodiment of this application; and

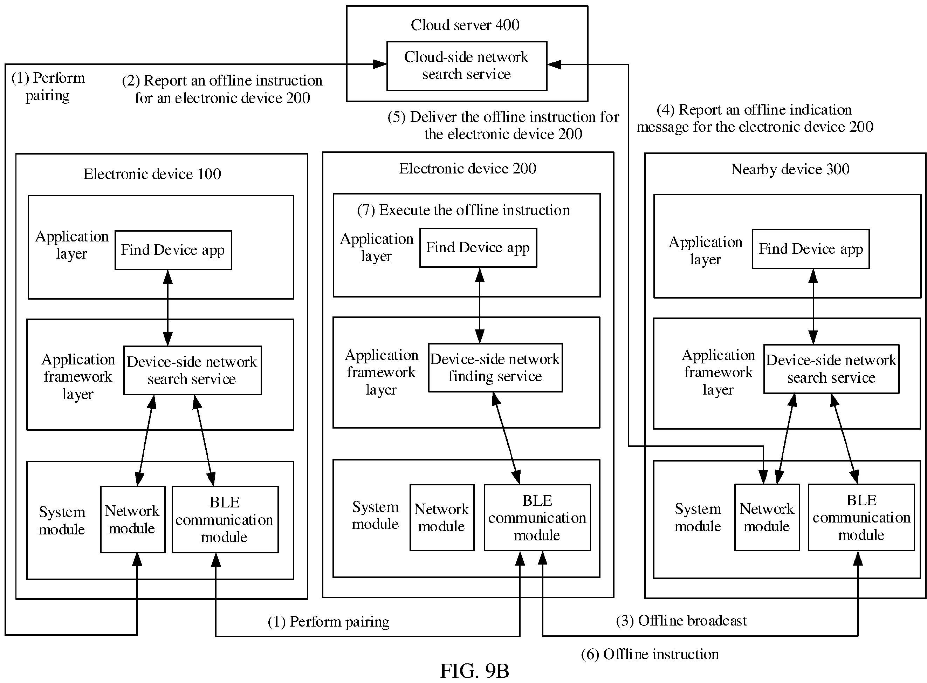

FIG. 9B is a diagram of a system architecture of an offline device control system according to an embodiment of this application.

### DESCRIPTION OF EMBODIMENTS

Technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language, for example, Java or an extensible markup language (extensible markup language, XML). Interface source code is parsed and rendered on an electronic device, and is finally presented as user-recognizable content. The user interface is usually represented in a form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of the electronic device.

A communication system 10 provided in an embodiment of this application is first described.

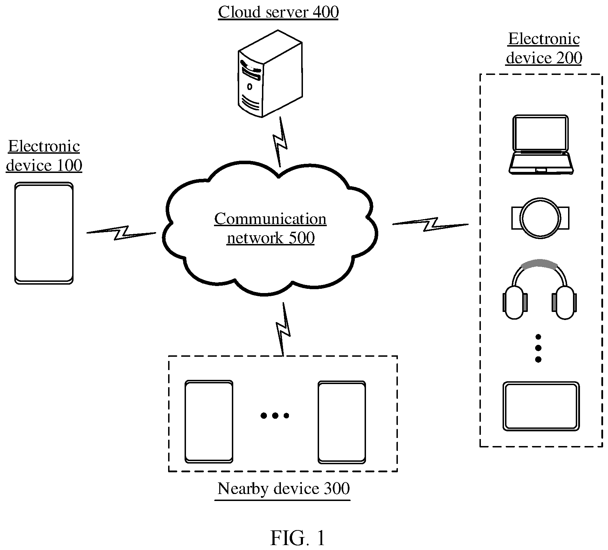

For example, FIG. 1 is a diagram of the communication system 10 according to an embodiment of this application. As shown in FIG. 1, the communication system 10 includes an electronic device 100, one or more electronic devices (for example, an electronic device 200) that establish a binding relationship with the electronic device 100 for device search, one or more online nearby devices (for example, a nearby device 300) near the electronic device 200, and a cloud device (for example, a cloud server 400).

The electronic device 100, the electronic device 200, and the nearby device 300 may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (a smart band), a vehicle-mounted device, a smart home device (a smart TV, a smart screen, a large screen device, or the like), and/or a smart city device. Alternatively, the electronic device 200 may be a digital device that is not configured with a display, for example, a sound box or a Bluetooth headset. Specific types of the electronic device 100, the electronic device 200, and the nearby device 300 are not specially limited in embodiments of this application. The electronic device 100 and the electronic device 200 may carry a same operating system, or may carry different operating systems, such as iOS, Android, Microsoft, and HarmonyOS.

The cloud server 400 may be one server, a server cluster including a plurality of servers, or a cloud computing center.

The electronic device 100, the electronic device 200, and the nearby device 300 may communicate with the cloud server 400 by using one or more communication networks 500. The communication network 500 may be a local area network (local area network, LAN), or may be a wide area network (wide area network, WAN), for example, the internet. The communication network 500 may be implemented using any known network communication protocol. The network communication protocol may be various wired or wireless communication protocols, such as Ethernet, a universal serial bus (universal serial bus, USB), FireWire (FireWire), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth (bluetooth, BT), wireless fidelity (wireless fidelity, Wi-Fi), near field communication (near field communication, NFC), a voice over internet protocol (voice over internet protocol, VoIP), an ultra-wideband (ultra-wideband, UWB), ZigBee communication, a communication protocol that supports a network slicing architecture, or any other suitable communication protocol.

In some implementation solutions, that the electronic device is online means that the electronic device accesses the communication network 500 (that is, a local area network and/or a wide area network), and may communicate with the cloud server 400 over the communication network 500; and that the electronic device is offline means that the electronic device does not access the communication network 500, and cannot communicate with the cloud server 400. In some implementation solutions, that the electronic device is online means that the electronic device accesses the communication network 500, may communicate with the cloud server 400 over the communication network 500, and the electronic device is connected to a SIM card. That the electronic device is offline means that the electronic device does not access to the communication network 500, and/or the electronic device is not connected to a SIM card.

It should be noted that the SIM card may be a physical SIM card, and the electronic device has a SIM card interface, and may be connected to the physical SIM card by using the SIM card interface. Alternatively, the SIM card may be a virtual SIM card, and the electronic device is connected to the virtual SIM card, that is, accesses a carrier network.

The electronic device 100 is configured with a display. After being bound to the electronic device 200, the electronic device 100 may provide a related function of device search for the electronic device 200. When the electronic device 200 is offline, the user may also send an offline instruction to the cloud server 400 by using the electronic device 100. The offline instruction is used to control the offline electronic device 200 to implement the related function of device search, for example, performing data erasure, data encryption, data backup, screen locking, or sound playing. Optionally, after the electronic device 100 is bound to the electronic device 200, the electronic device 200 may also provide the related function of device search for the electronic device 100.

In embodiments of this application, the electronic device 100 and the electronic device 200 have a device-side network search service. The device-side network search service is used to provide a service related to offline control, for example, sending, encryption, and decryption of an offline instruction. A binding relationship between the electronic device 100 and the electronic device 200 for device search may also be referred to as a binding relationship for network search. In embodiments of this application, the electronic device 100 may establish the binding relationship with the electronic device 200 for device search through a near field communication technology, or may establish the binding relationship for device search by logging in to a same account. A manner in which the electronic device 100 establishes the binding relationship with the electronic device 200 for device search is not specifically limited in embodiments of this application. The near field communication technology may be a Bluetooth communication technology, or may be an NFC technology, a UWB communication technology, a ZigBee communication technology, or the like. This is not specifically limited in embodiments of this application.

The electronic device 200 may be configured with a display, or may not be configured with a display. When determining that a device is offline, the electronic device 200 may send an offline broadcast by using a specific near field communication technology (for example, a Bluetooth low energy (Bluetooth Low Energy, BLE) communication technology). The BLE communication technology is a personal local area network technology. Compared with a conventional Bluetooth communication technology, the BLE communication technology aims to reduce power consumption and costs while maintaining a same communication range.

The nearby device 300 has the device-side network search service, and may listen to the offline broadcast sent by using the specific near field communication technology (for example, the BLE communication technology). After obtaining, through listening, the offline broadcast of the electronic device 200, the online nearby device 300 may send an assistance indication message for the electronic device 200 to the cloud server 400.

It should be noted that a near field communication technology (for example, a Wi-Fi communication technology) used for pairing and binding between the electronic device 100 and the electronic device 200 and a near field communication technology (for example, the BLE communication technology) used for data receiving and sending between the nearby device 300 and the electronic device 200 may be the same or may be different. This is not specifically limited herein.

The cloud server 400 may store the offline instruction sent by the electronic device 100. After the assistance indication message sent by the nearby device 300 is received, the offline instruction of the electronic device 100 may be forwarded to the offline electronic device 200 by using the online nearby device 300, to control the offline electronic device 200 to execute the offline instruction (for example, data erasure or data encryption), thereby ensuring data security of the lost electronic device 200.

According to the communication system 10 provided in embodiments of this application, when the lost electronic device 200 is offline, the electronic device 200 may also be controlled to execute the offline instruction of the electronic device 100, to avoid data leakage and data loss, and protect user privacy security.

The electronic device 100, the electronic device 200, the nearby device 300, and the cloud server 400 may be deployed on land, including indoor, outdoor, handheld, or vehicle-mounted, or may be deployed on a water surface, or may be deployed on an aircraft and an artificial satellite in the air. This is not limited in embodiments of this application.

It should be understood that FIG. 1 is merely a diagram of a structure of a communication system according to an embodiment of this application, and does not constitute a specific limitation on the communication system 10. The communication system 10 may include more or fewer devices than those shown in the figure, for example, may further include a wireless relay device and a wireless backhaul device (not shown in FIG. 1). This is not limited herein.

The following describes a diagram of a structure of the electronic device 100 according to an embodiment of this application. For structures of the electronic device 200 and the nearby device 300 in embodiments of this application, refer to related descriptions of the electronic device 200. Details are not described subsequently.

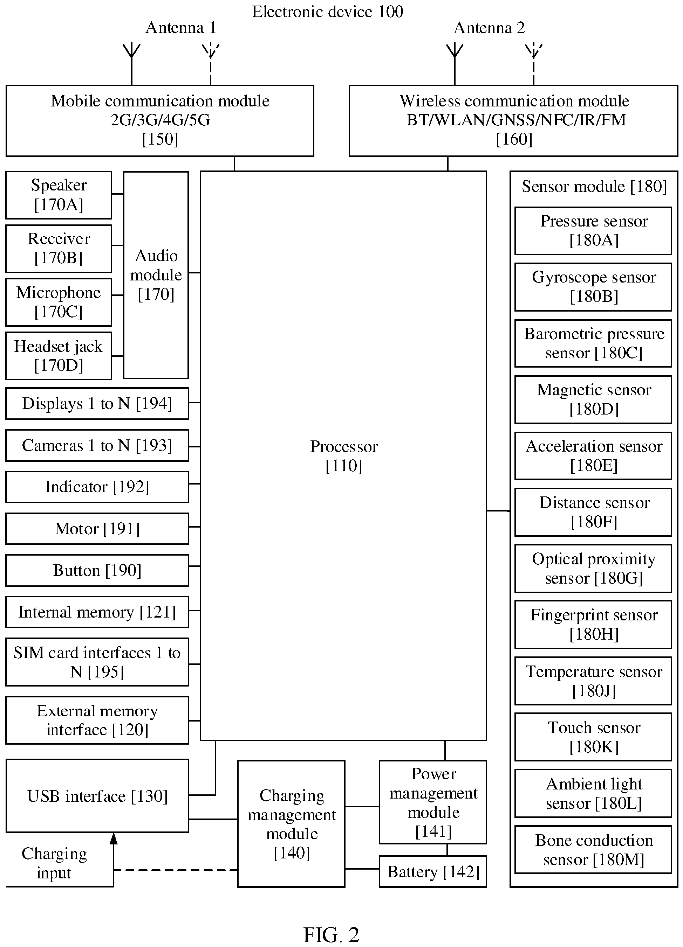

FIG. 2 is a diagram of the structure of the electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may alternatively transmit the audio signal to the wireless communication module 160 through the PCM interface, to implement the function of answering the call through the Bluetooth headset. Both the I2S interface and the PCM interface may be configured to perform audio communication.

The UART interface is a universal serial data, and is configured to perform asynchronous communication. The bus may be a bidirectional communication bus. The bus converts to-be-transmitted data between serial communication and parallel communication. In some embodiments, the UART interface is generally used to connect the processor 110 and the wireless communication module 160. For example, the processor 110 communicates with a Bluetooth module in the wireless communication module 160 through the UART interface, to implement a Bluetooth function. In some embodiments, the audio module 170 may transmit the audio signal to the wireless communication module 160 through the UART interface, to implement a function of playing music through the Bluetooth headset.

An MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface can be configured by using software. The GPIO interface can be configured as a control signal or a data signal. In some embodiments, the GPIO interface may be configured to connect the processor 110 to the camera 193, the display 194, the wireless communication module 160, the audio module 170, the sensor module 180, and the like. The GPIO interface can also be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device. It can also be configured to connect to a headset and play audio through the headset. The interface may be further configured to connect to another electronic device like an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger, or may be a wired charger. In some embodiments of wired charging, the charging management module 140 may receive charging input of the wired charger through the USB interface 130. In some embodiments of wireless charging, the charging management module 140 may receive wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memory, RAM) and one or more nonvolatile memories (nonvolatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, generally referred to as a DDR5 SDRAM), and the like. The non-volatile memory may include a magnetic disk storage device and a flash memory (flash memory).

According to an operating principle, the flash memory may be classified into a NOR FLASH, a NAND FLASH, a 3D NAND FLASH, and the like; according to potential orders of storage cells, the flash memory may be classified into a single-level cell (single-level cell, SLC), a multi-level cell (multi-level cell, MLC), a triple-level cell (triple-level cell, TLC), a quad-level cell (quad-level cell, QLC), and the like; and according to storage specifications, the flash memory may be classified into a universal flash storage (English: universal flash storage, UFS), an embedded multi media memory card (embedded multi media Card, eMMC), and the like.

The random access memory may be directly read and written by using the processor 110. The random access memory may be configured to store an executable program (for example, machine instructions) in an operating system or another running program, and may be configured to store data of a user, data of an application, and the like.

The nonvolatile memory may also store the executable program, the data of the user, the data of the application, and the like, which may be loaded into the random access memory in advance for directly reading and writing by the processor 110.

The external memory interface 120 may be configured to connect to an external nonvolatile memory, to extend a storage capability of the electronic device 100. The external nonvolatile memory communicates with the processor 110 through the external memory interface 120, to implement a data storage function. For example, files such as music and a video are stored in the external nonvolatile memory.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor.

The gyroscope sensor 180B may be configured to determine a moving posture of the electronic device 100. In some embodiments, angular velocities of the electronic device 100 around three axes (which are x, y, and z axes) may be determined by using the gyroscope sensor 180B.

The barometric pressure sensor 180C is configured to measure barometric pressure.

The magnetic sensor 180D includes a Hall sensor.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device.

The distance sensor 180F is configured to measure a distance. The electronic device 100 may measure the distance in an infrared manner or a laser manner.

The optical proximity sensor 180G may include, for example, a light-emitting diode (LED) and an optical detector, for example, a photoelectric diode.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint.

The temperature sensor 180J is configured to detect a temperature. In some embodiments, the electronic device 100 executes a temperature processing policy through the temperature detected by the temperature sensor 180J.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal.

The button 190 includes a power button, a volume button, and the like. The button 190 may be a mechanical button, or may be a touch button. The electronic device 100 may receive button input, and generate button signal input related to user setting and function control of the electronic device 100.

The following describes a structure of the cloud server 400 according to an embodiment of this application.

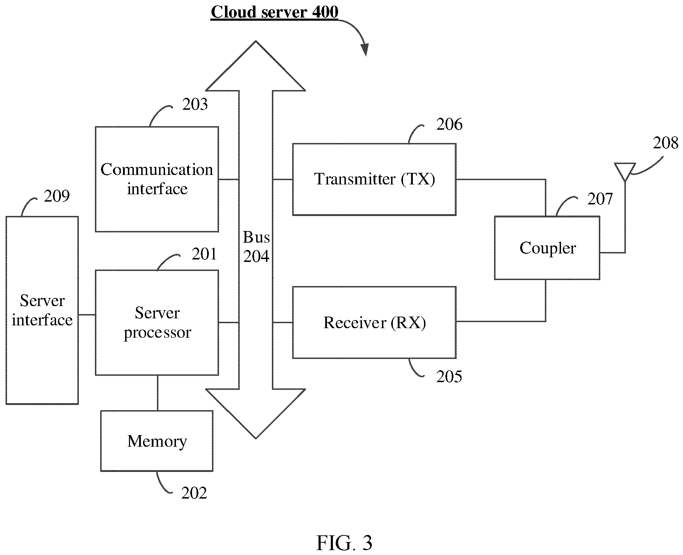

FIG. 3 is an example structure of the cloud server 400 according to an embodiment of this application. As shown in FIG. 3, the cloud server 400 may include one or more server processors 201, a memory 202, a communication interface 203, a receiver 205, a transmitter 206, a coupler 207, an antenna 208, and a server interface 209. These components may be connected by using a bus 204 or in another manner. In FIG. 3, for example, the components are connected by using the bus.

The communication interface 203 may be used by the cloud server 400 to communicate with another communication device, for example, a terminal device. Specifically, the terminal device may be the electronic device 100 shown in FIG. 3. Specifically, the communication interface 203 may be a 5G communication interface, or may be a future new radio communication interface. In addition to a wireless communication interface, the cloud server 400 may be further configured with a wired communication interface 203, for example, a local access network (local access network, LAN) interface. The transmitter 206 may be configured to perform transmission processing on a signal output by the server processor 201. The receiver 205 may be configured to perform reception processing on a mobile communication signal received by the antenna 208.

In some embodiments of this application, the transmitter 206 and the receiver 205 may be considered as a wireless modem. In the cloud server 400, there may be one or more transmitters 206 and receivers 205. The antenna 208 may be configured to convert electromagnetic energy in a transmission line into an electromagnetic wave in free space, or convert an electromagnetic wave in the free space into electromagnetic energy in the transmission line. The coupler 207 is configured to split a mobile communication signal received by the antenna 208 into a plurality of signals, and allocate the plurality of signals to a plurality of receivers 205.

The memory 202 is coupled to the processor 201 of the server, and is configured to store various software programs and/or a plurality of sets of instructions. Specifically, the memory 202 may include a high-speed random access memory, or a nonvolatile memory, for example, one or more disk storage devices, a flash memory, or another nonvolatile solid-state storage device. The memory 202 may further store a network communication program. The network communication program may be used to communicate with one or more additional devices, terminal devices, and network devices.

In some embodiments of this application, the memory 202 may be configured to store an implementation program, on the cloud server 400 side, of a method for processing a web page access exception provided in one or more embodiments of this application.

The processor 201 of the server may be configured to read and execute computer-readable instructions. Specifically, the processor 201 of the server may be configured to invoke a program stored in the memory 202, for example, the implementation program, on the cloud server 400 side, of the method for processing the web page access exception provided in one or more embodiments of this application, and execute instructions included in the program.

It should be noted that the cloud server 400 shown in FIG. 3 is merely an implementation of embodiments of this application. In actual application, the cloud server 400 may further include more or fewer components. This is not limited herein.

The following describes an application scenario of an offline device control method provided in an embodiment of this application.

In some implementation solutions, a Find Device application (application, APP) is installed on the electronic device 100. All bound electronic devices may be viewed by using the Find Device app. A network connection status, a device status, and positioning information of the bound device may be viewed, and the bound device may be further controlled to perform a related function of device search, for example, data erasure, data encryption, data backup, screen locking, or sound playing.

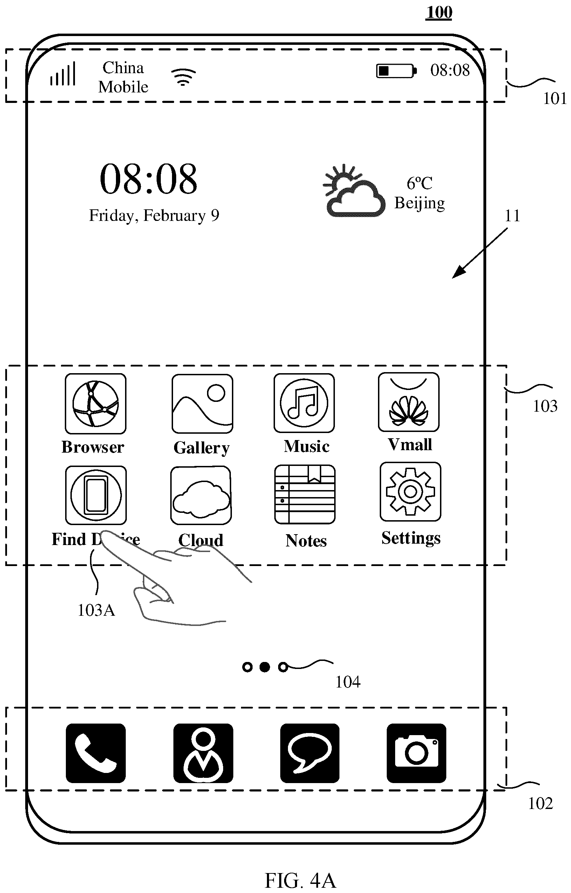

For example, FIG. 4A to FIG. 4D show related user interfaces for viewing the bound electronic device.

FIG. 4A shows a home screen 11 that is on the electronic device 100 and that is used to display an installed application (application, APP). The home screen 11 may include a status bar 101, a tray 102 including commonly used application icons, and another application icon 103.

The tray 102 including commonly used application icons may display a Phone icon, a Contacts icon, a Messages icon, and a Camera icon. The another application icon 103 may display: a Browser icon, a Gallery icon, a Music icon, a Settings icon, and an icon 103A of a Find Device app. The home screen 11 may further include a page indicator 104. The other application icons may be distributed on a plurality of pages, and the page indicator 104 may indicate a specific page on which an application is currently viewed by a user. The user can swipe left or right in an area of the other application icons to view application icons on other pages.

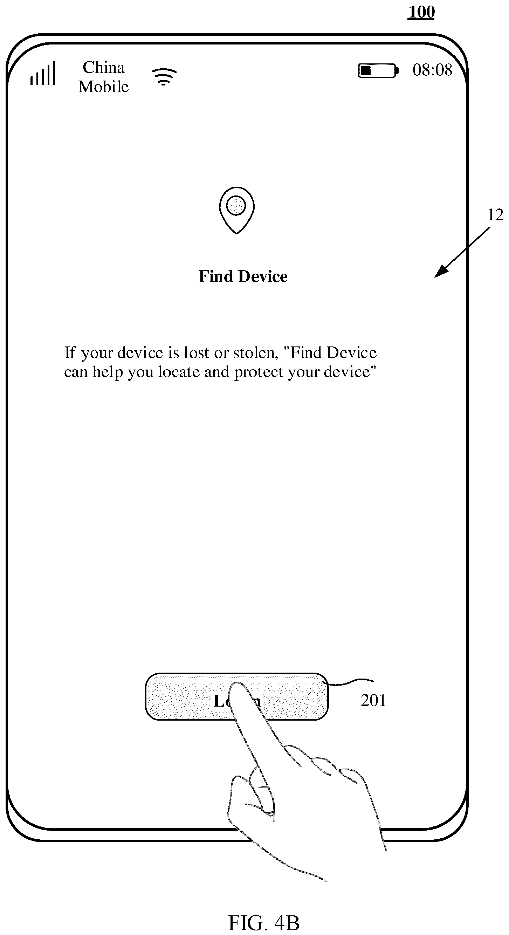

As shown in FIG. 4A and FIG. 4B, the icon 103A of the Find Device app may receive an input operation (for example, a tap operation) of the user. If the Find Device app does not log in to an account, the electronic device 100 may display a login interface 12 of the Find Device app in response to the input operation. The login interface 12 includes a login control 201.

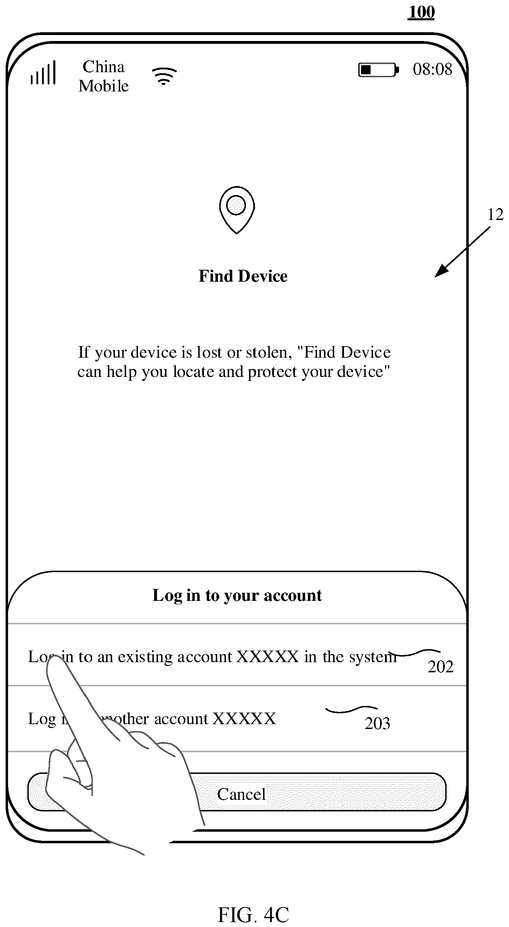

As shown in FIG. 4B and FIG. 4C, the login control 201 may receive an input operation (for example, a tap operation) of the user, and the electronic device 100 displays, in response to the input operation, a login option 202 for logging in to an existing account (for example, an account 1) in a system and a login option 203 for logging in to another account.

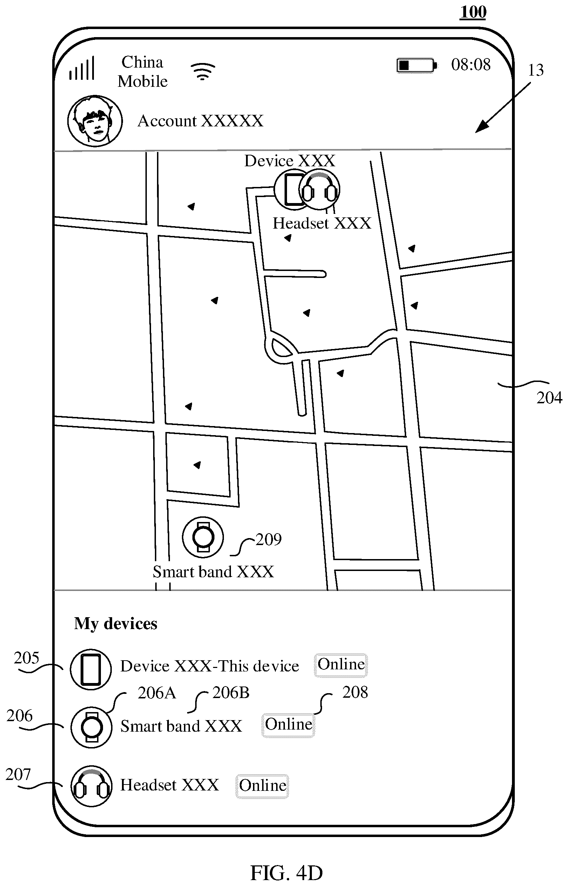

The login option 202 is used as an example. As shown in FIG. 4C and FIG. 4D, the login option 202 may receive an input operation (for example, a tap operation) of the user. The electronic device 100 displays, in response to the input operation, a user interface 13 after the Find Device app logs in to the existing account in the system. The user interface 13 includes a map display area 204 and a device list.

The device list may include a device label 205 of the electronic device 100 and a device label of at least one electronic device bound to the electronic device 100, for example, a device label 206 of a smart band and a device label 207 of a headset. The device label 206 of the smart band is used as an example. The device label 206 may include a device icon 206A and/or a device model 206B. The device list further includes a network connection identifier of each device, where the network connection identifier indicates that the device is in an online state or an offline state. For example, a network connection identifier 208 of the smart band indicates that the smart band is currently in the online state.

The map display area 204 may display a location of each device in the device list on the map. The smart band is used as an example. A device label 209 of the smart band is displayed at a location of the smart band on the map.

It may be understood that, if the Find Device app has logged in to an account currently, after the user taps the icon 103A of the Find Device app, the electronic device 100 may directly display the user interface 13 shown in FIG. 4D.

In embodiments of this application, the electronic device 100 may be bound to a new electronic device (for example, the electronic device 200).

In some implementation solutions, the electronic device 100 may pair with the electronic device 200 for device search through a near field communication technology, to establish a binding relationship for device search. The near field communication technology may be a Bluetooth communication technology, or may be a communication technology like an NFC communication technology or a UWB communication technology. In an implementation, when the electronic device 100 and the electronic device 200 establish a communication connection for a first time through the near field communication technology, the electronic device 100 and the electronic device 200 are automatically triggered to perform pairing for device search. When the electronic device 100 and the electronic device 200 establish the communication connection for a non-first time through the near field communication technology, the user may also manually trigger the electronic device 100 and the electronic device 200 to perform pairing for device search. This is not specifically limited herein.

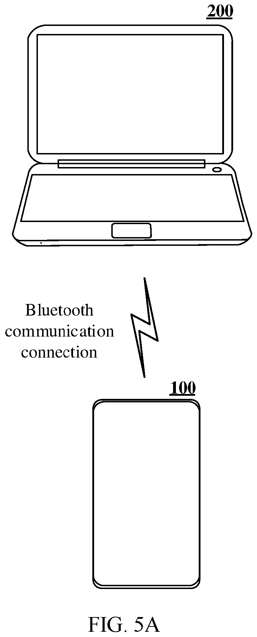

For example, the electronic device 200 is a notebook computer. FIG. 5A to FIG. 5H show user interfaces related to pairing between the electronic device 100 and the electronic device 200.

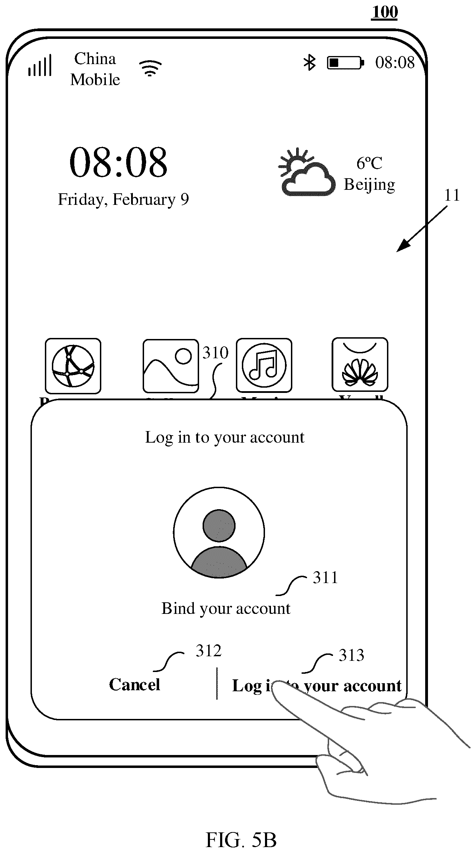

As shown in FIG. 5A, when the electronic device 100 and the electronic device 200 establish a Bluetooth communication connection for a first time, the electronic device 100 and the electronic device 200 are automatically triggered to perform pairing for device search. Optionally, as shown in FIG. 5B, in a pairing process, if the Find Device app of the electronic device 100 does not log in to an account, the electronic device 100 displays a pop-up window 310. The pop-up window 310 includes prompt information 311, a cancel control 312, and an account login control 313. The prompt information 311 is used to prompt the user to log in to an account. The cancel control 312 is used to cancel current pairing, and stop displaying the pop-up window 310.

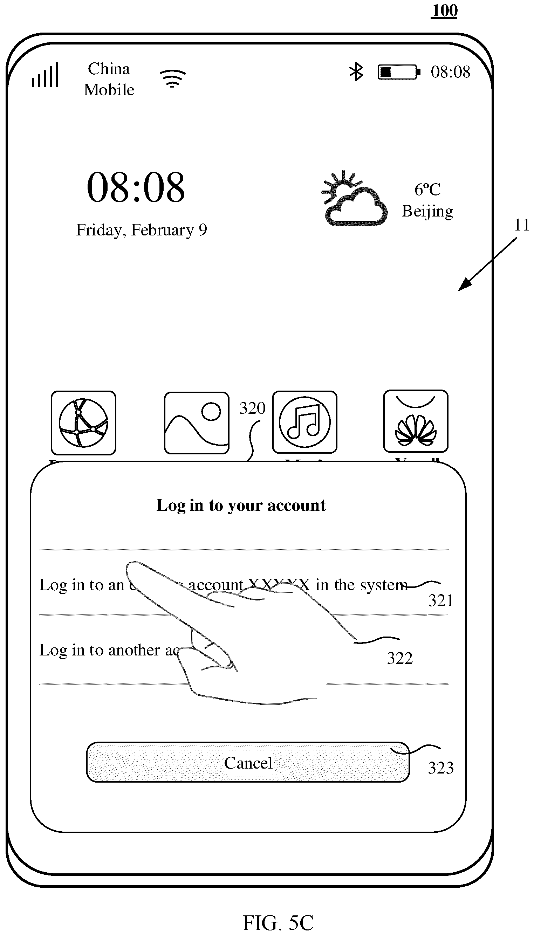

As shown in FIG. 5B and FIG. 5C, the account login control 313 may receive an input operation (for example, a tap operation) of the user, and the electronic device 100 displays a pop-up window 320 in response to the input operation. The pop-up window 320 includes a login option 321 for logging in to an existing account (for example, an account 1) in a system, a login option 322 for logging in to another account, and a cancel control 323. The login option 321 and the login option 322 are used to log in to an account. The cancel control 323 is used to cancel pairing, and stop displaying the pop-up window 320.

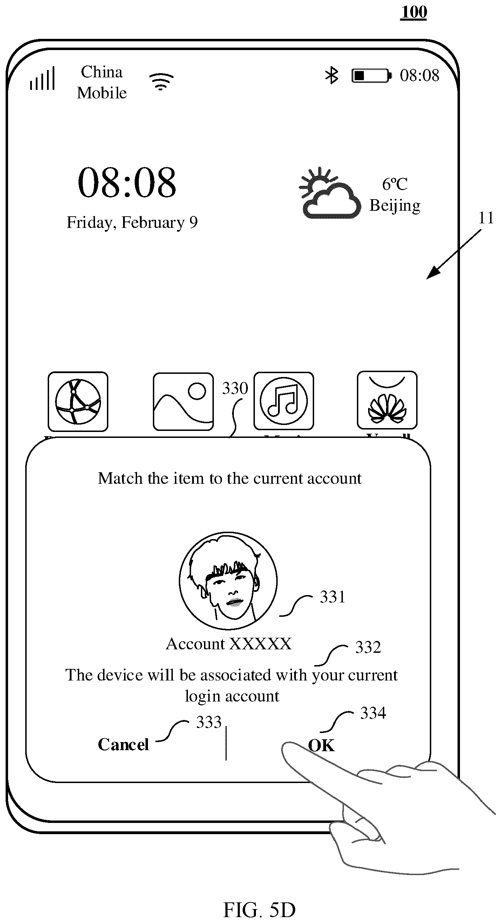

As shown in FIG. 5C and FIG. 5D, the login option 321 may receive an input operation (for example, a tap operation) of the user, and the electronic device 100 displays a pop-up window 330 in response to the input operation. The pop-up window 330 includes an account and profile picture 331 of the account 1, prompt information 332, a cancel control 333, and an OK control 334. The prompt information 332 is used to prompt to associate the electronic device 200 with a currently logged-in account. The cancel control 333 is used to cancel current pairing, and stop displaying the pop-up window 330.

It should be noted that, if the Find Device app of the electronic device 100 has logged in to the account 1 when pairing is triggered, the electronic device 100 may directly display the pop-up window 330, and does not need to display the pop-up windows shown in FIG. 5B and FIG. 5C.

In some implementation solutions, during pairing and binding between the electronic device 100 and the electronic device 200, the electronic device 100 and the electronic device 200 can complete pairing and binding only when the Find Device app of the electronic device 100 and the Find Device app of the electronic device 200 log in to a same account (for example, the account 1) or log in to accounts that have a preset relationship (that is, login accounts of the two are associated accounts). It may be understood that, when the account 1 and an account 2 are in the preset relationship, the account 1 may obtain authorization for a binding relationship with the account 2 for device search, and the electronic device that logs in to the account 1 and the electronic device that logs in to the account 2 may perform pairing and binding for device search. For example, the preset relationship may mean that the account 2 is a familiarity account bound to the account 1, or a specific group (for example, a location sharing group or a family group) of the account 1 includes the account 2. The preset relationship is not specifically limited in embodiments of this application.

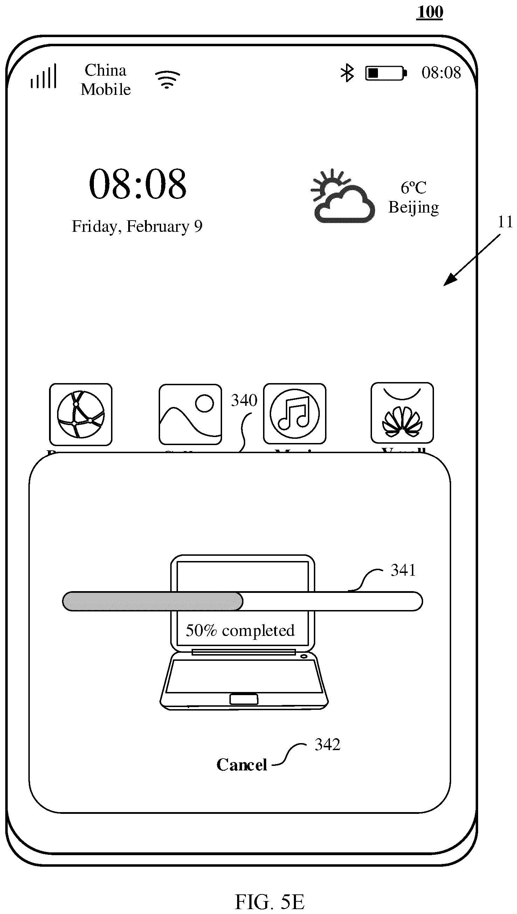

As shown in FIG. 5D and FIG. 5E, the OK control 334 may receive an input operation (for example, a tap operation) of the user, and the electronic device 100 displays a pop-up window 340 in response to the input operation. The pop-up window 340 includes a pairing progress bar 341 and a cancel control 342. The pairing progress bar 341 indicates a pairing progress of the electronic device 100 and the electronic device 200. The cancel control 342 is used to cancel current pairing, and stop displaying the pop-up window 340.

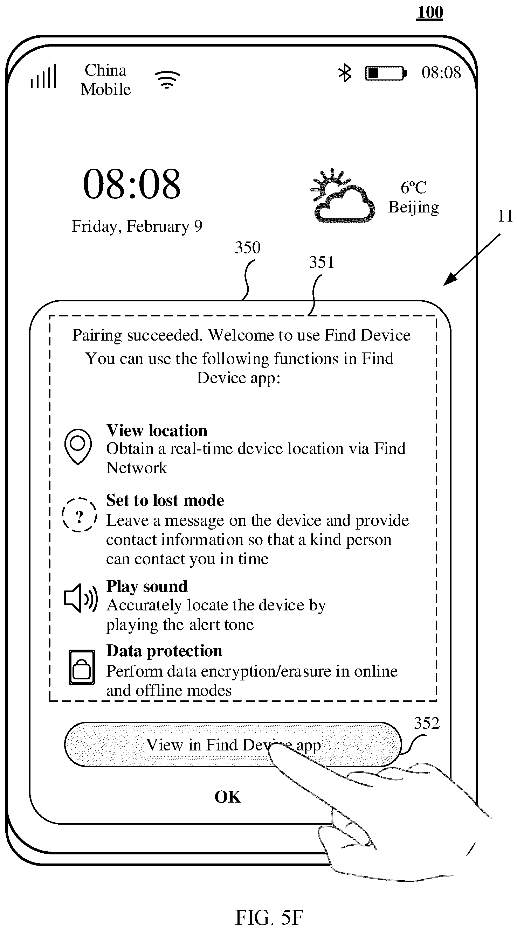

As shown in FIG. 5F, after the electronic device 100 is successfully paired with the electronic device 200, the electronic device 100 establishes a binding relationship with the electronic device 200 for device search, the electronic device 100 displays a pop-up window 350, and the pop-up window 350 includes prompt information 351 and a view control 352. The prompt information 351 is used to prompt a function (for example, location viewing, lost mode setting, sound playing, and data protection) that can be provided by the Find Device app for the electronic device 200 and the view control 352.

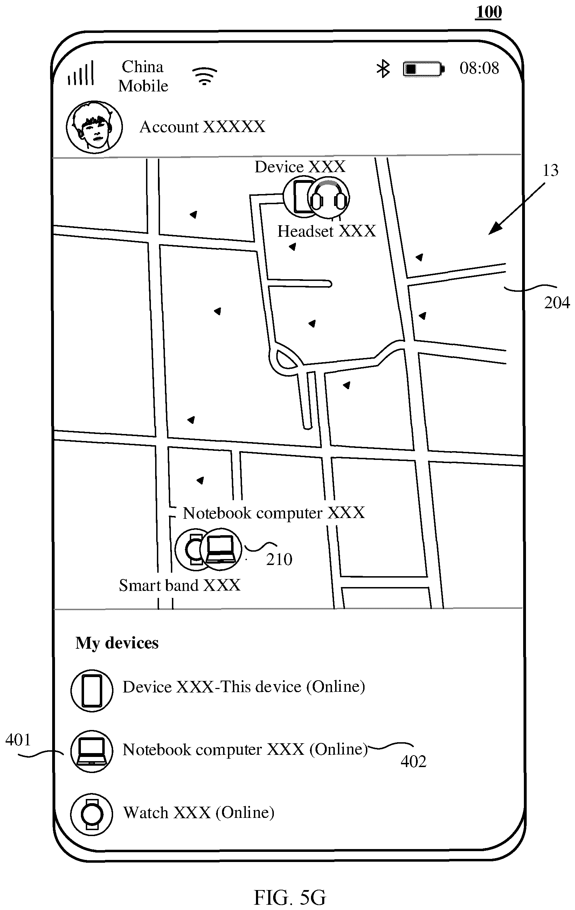

As shown in FIG. 5F and FIG. 5G, the view control 352 may receive an input operation (for example, a tap operation) of the user, and the electronic device 100 displays the user interface 13 of the Find Device app in response to the input operation. A device label 401 and a network connection identifier 402 of the electronic device 200 that is successfully paired are added to the device list of the user interface 13. In this case, the network connection identifier 402 indicates that the electronic device 200 is in the online state. A device label 210 of the electronic device 200 is newly added to the map display area 204 of the user interface 13.

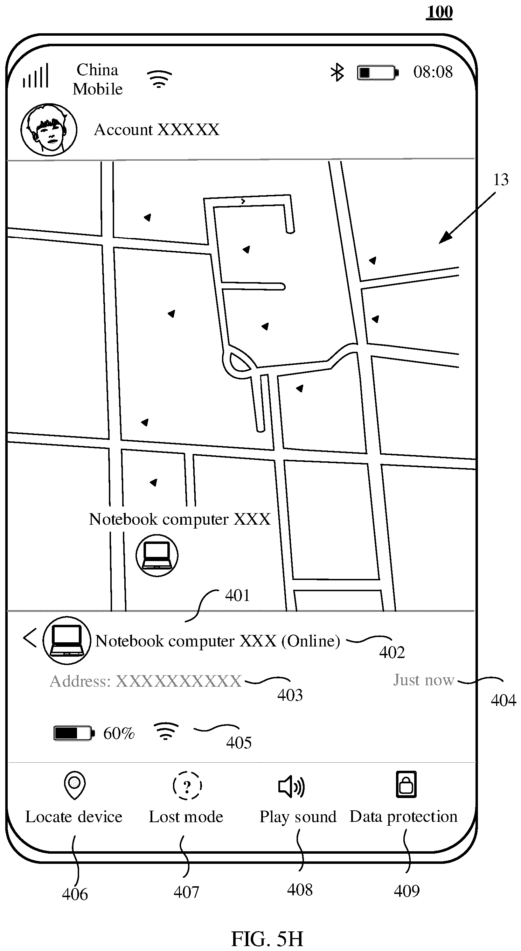

As shown in FIG. 5G and FIG. 5H, the device label 401 of the electronic device 200 may receive an input operation (for example, a tap operation) of the user. The electronic device 100 displays an address 403 of the electronic device 200, obtaining time 404 of the address 403, device information 405 (for example, a battery level indicator or a network icon) of the electronic device 200, and a function control in response to the input operation. The function control may include a device positioning control 406, a lost mode control 407, a sound playing control 408, and a data protection control 409.

The device positioning control 406 may be used to query a current location of the electronic device 200, to update the address 403 and a display location of the device label 210 of the electronic device 200 in the map display area 204.

The lost mode control 407 may be used to set the electronic device 200 to a lost mode. For example, in the lost mode, the electronic device 200 locks a screen, so that another user cannot use the electronic device 200.

The sound playing control 408 may be used to control the electronic device 200 to play a specified audio (for example, a ringtone), so that an owner can find the lost electronic device 200.

The data protection control 409 may be used to control the electronic device 200 to perform data encryption, data erasure, or data backup, to protect data of the electronic device 200.

In some implementation solutions, the pairing process in FIG. 5B to FIG. 5F is not required, and the electronic device 100 may also establish the binding relationship with the electronic device 200 for device search by logging in to a trust chain of a same account. A manner in which the electronic device 100 establishes the binding relationship with the electronic device 200 for device search is not specifically limited in embodiments of this application.

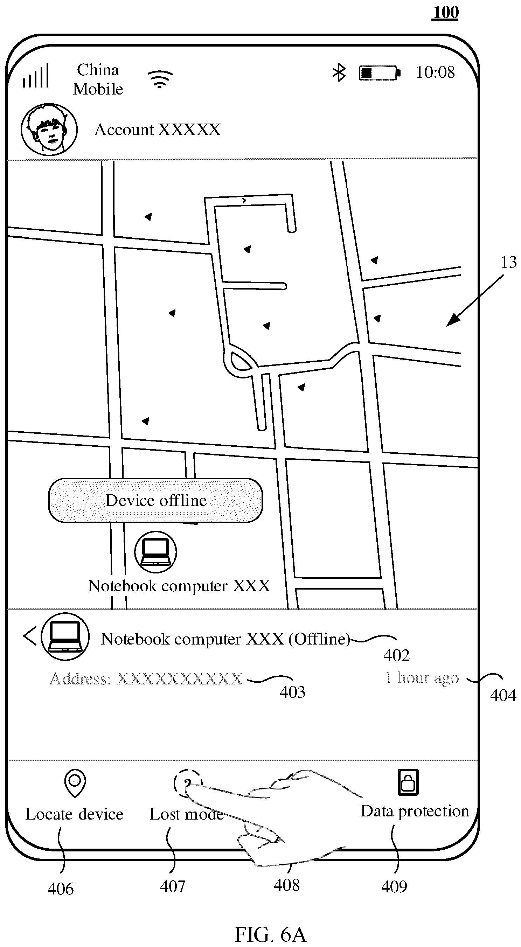

For example, the electronic device 200 is a notebook computer. FIG. 6A to FIG. 6E show related user interfaces of the offline electronic device 200 controlled by the electronic device 100 after the electronic device 100 is bound to the electronic device 200.

As shown in FIG. 6A, after the electronic device 200 goes offline, a network connection identifier 402 indicates that the electronic device 200 is in an offline state, and an address displayed by the address 403 is an address of the electronic device 200 that is last obtained before the electronic device 200 goes offline.

In embodiments of this application, when the electronic device 200 is offline, any one of the function controls (namely, the device positioning control 406, the lost mode control 407, the sound playing control 408, and the data protection control 409) shown in FIG. 6A may receive the input operation of the user. The electronic device 100 may send, in response to the input operation, an offline instruction to the offline electronic device 200 via the nearby device 300 near the electronic device 200, to control the electronic device 200 to perform an operation corresponding to the function control.

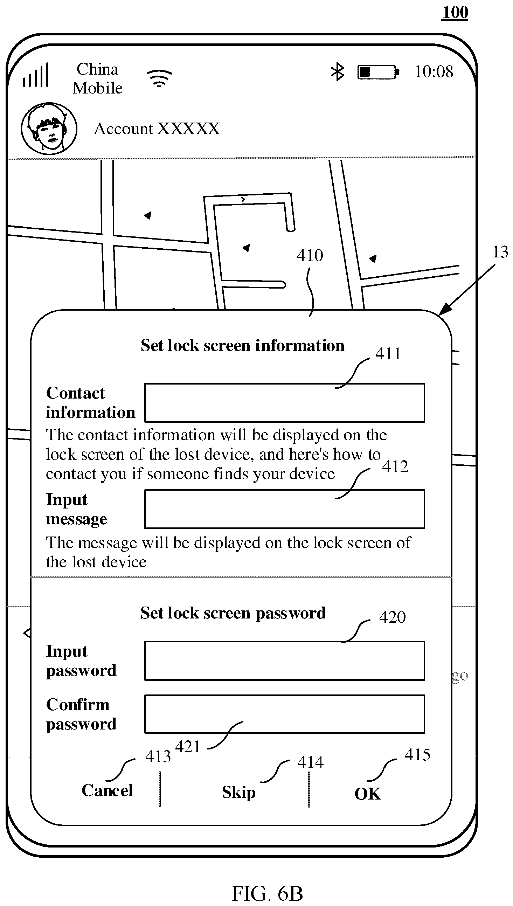

For example, as shown in FIG. 6A and FIG. 6B, the lost mode control 407 may receive the input operation (for example, the tap operation) of the user, and the electronic device 100 displays a pop-up window 410 in response to the input operation. The pop-up window 410 is used to set lock screen information and/or a lock screen password of the electronic device 200. The pop-up window 410 includes a contact information input box 411, a message leaving input box 412, a password input box 420, a password input box 421, a cancel control 413, a skip control 414, and an OK control 415. The cancel control 413 is used to cancel setting the electronic device 200 to the lost mode, and trigger the electronic device 100 to stop displaying the pop-up window 410. The skip control 414 is used to skip setting the lock screen information and/or the lock screen password of the electronic device 200, and directly set the electronic device 200 to the lost mode.

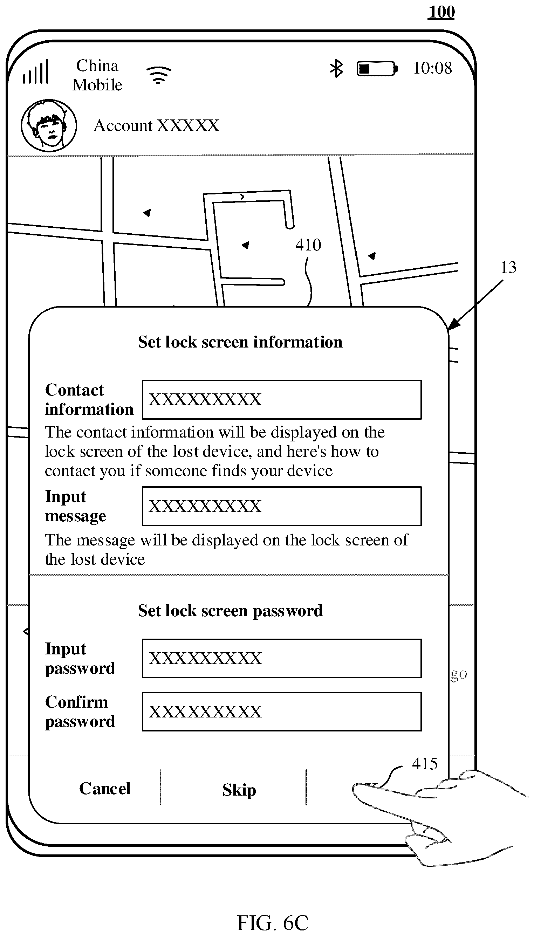

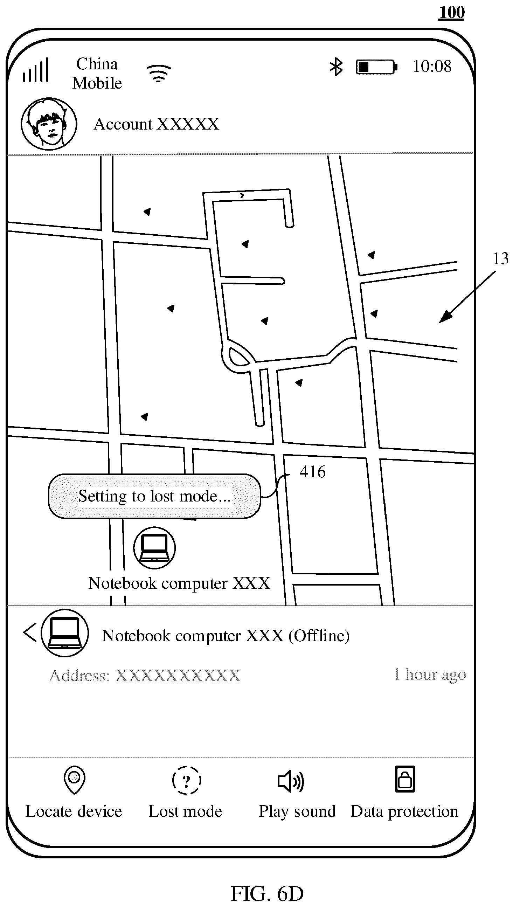

As shown in FIG. 6C and FIG. 6D, after the user inputs contact information in the contact information input box 411, and inputs a message in the message leaving input box 412, the OK control 415 receives the input operation (for example, the tap operation) of the user. In response to the input operation, the electronic device 100 generates the offline instruction, and displays prompt information 416, where the prompt information 416 indicates that the electronic device 200 is setting the lost mode, that is, locking the screen, and displaying the lock screen information that is set by the user (for example, the contact information and the message input by the user). The electronic device 100 sends the offline instruction to the offline electronic device 200 by using the online nearby device 300.

As shown in FIG. 6C, the user may further input a new lock screen password in the password input box 420 and the password input box 421. The offline instruction further instructs the electronic device 200 to set the new lock screen password. When setting the new lock screen password, the user needs to input a same password in the password input box 420 and the password input box 421. When different passwords are input, the electronic device 100 may display prompt information to prompt the user that the input passwords are inconsistent. It may be understood that the password input box 421 is used to ensure correctness of the password input by the user. Optionally, only one password input box for the lock screen password may be displayed in the pop-up window 410. This is not specifically limited herein.

It may be understood that, in embodiments of this application, when the lost device is locked by using the lost mode control 407, the lock screen information may be set or may not be set, or the new lock screen password may be set/or may not be set. When the lost device is set with the lock screen password, after the user sets the new lock screen password by using the pop-up window 410, the lost device can be unlocked only by using the new lock screen password.

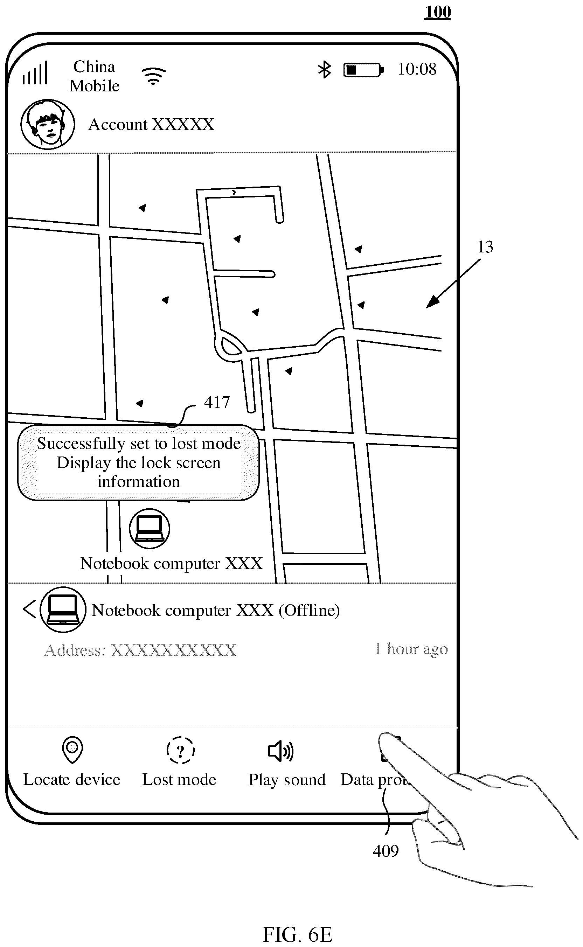

In some implementation solutions, as shown in FIG. 6E, after the electronic device 100 controls, by using the offline instruction, the offline electronic device 200 to set the lost mode, the offline electronic device 200 may feed back a confirmation message by using the online nearby device 300; and the electronic device 100 may display prompt information 417 based on the confirmation message fed back by the nearby device 300. The prompt information 417 is used to prompt that the offline electronic device 200 has successfully set the lost mode.

It may be understood that the offline electronic device 200 is controlled to display the lock screen information input by the user (for example, the contact information input by the user), so that another user contacts an owner of the electronic device 200 after picking up the lost electronic device 200.

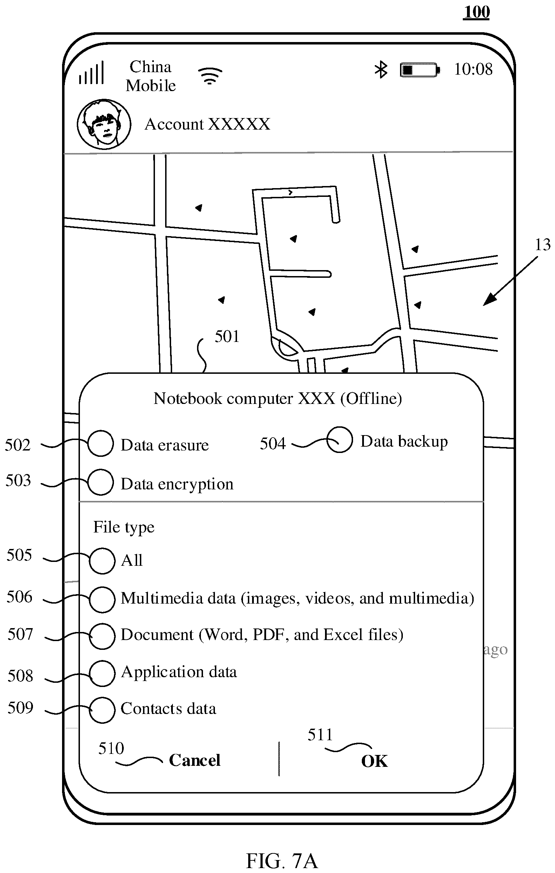

For example, as shown in FIG. 6E and FIG. 7A, the data protection control 409 may receive the input operation (for example, the tap operation) of the user, and the electronic device 100 displays a pop-up window 501 in response to the input operation. The pop-up window 501 may include a plurality of data protection options, for example, a data erasure option 502, a data encryption option 503, and a data backup option 504; and may further include a file type option, for example, an all option 505, a multimedia option 506, a document option 507, an application data option 508, and a contact data option 509; and may further include a cancel control 510 and an OK control 511.

It should be noted that the option 506 to the option 509 are example options provided in embodiments of this application, and should not constitute a limitation on embodiments of this application. Another file type option may be alternatively used in embodiments of this application.

In embodiments of this application, the user may select a required data protection option (that is, one of the plurality of data protection options), and then select a file type that needs to be protected (that is, the all option 505, or at least one of the option 506 to the option 509). Then, the user may operate the OK control 511. The electronic device 100 may generate an offline instruction in response to the input operation (for example, the tap operation) performed by the user on the OK control 511, where the offline instruction instructs to perform a data protection operation corresponding to the data protection option for the file type selected by the user, for example, a data erasure operation corresponding to the data erasure option 502, a data encryption operation corresponding to the data encryption option 503, and a data backup operation corresponding to the data backup option 504.

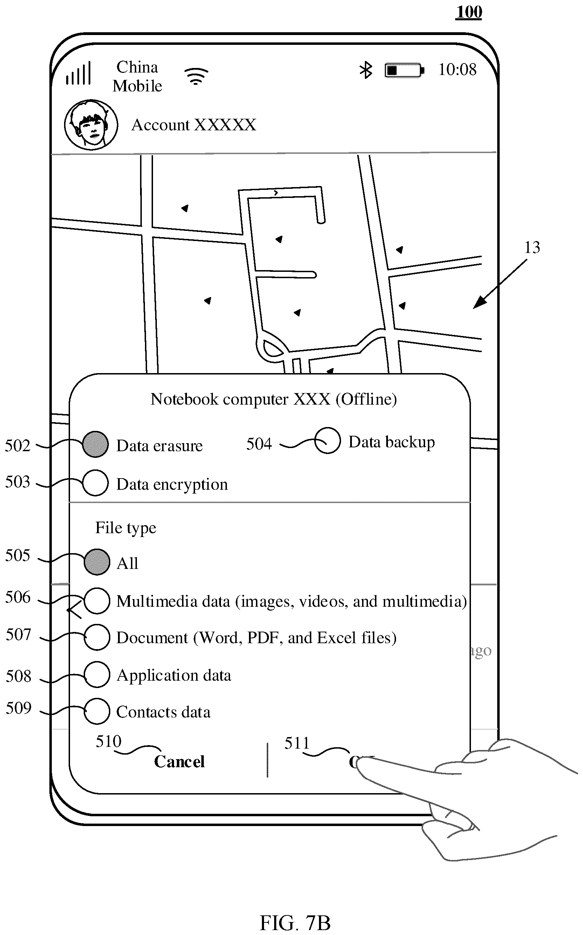

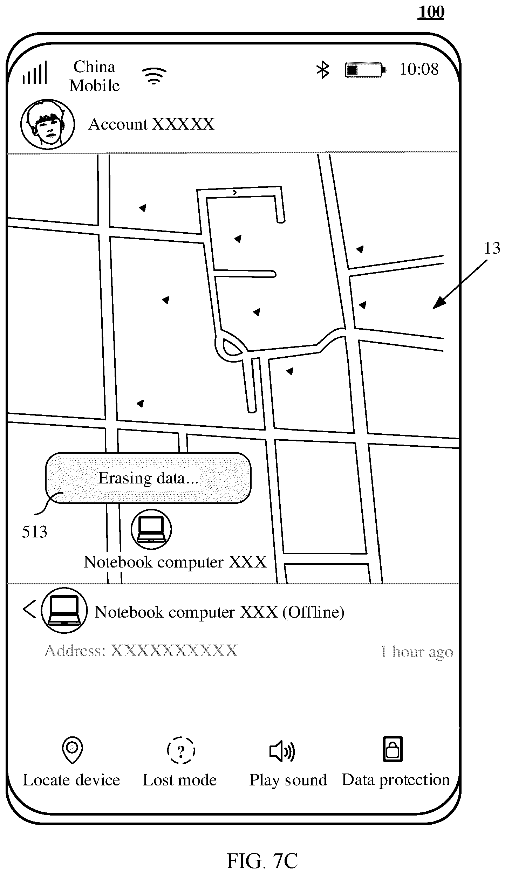

As shown in FIG. 7B and FIG. 7C, after the user selects the data erasure option 502 and the all option 505, the OK control 511 receives the input operation (for example, the tap operation) of the user; and the electronic device 100 generates the offline instruction in response to the input operation, and displays prompt information 513. The offline instruction is used to perform data erasure on the file type selected by the user, and the prompt information 513 is used to prompt that the electronic device 200 is being instructed to perform data erasure.

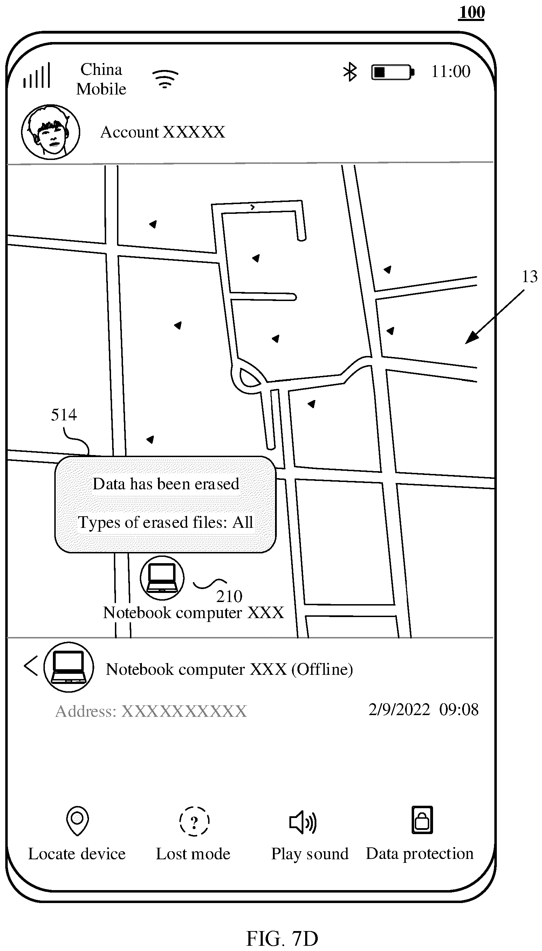

In some implementation solutions, as shown in FIG. 7D, after the electronic device 100 controls, by using the offline instruction, the offline electronic device 200 to complete data erasure, the offline electronic device 200 may feed back a confirmation message by using the online nearby device 300; and the electronic device 100 may display prompt information 514 based on the confirmation message fed back by the electronic device 200. The prompt information 514 is used to prompt that data of the electronic device 200 has been erased. Optionally, the prompt information 514 is further used to prompt a type of the erased file.

In some implementation solutions, after the offline electronic device 200 executes the offline instruction, the electronic device 200 displays prompt information, where the prompt information is used to prompt that the electronic device 200 has executed the offline instruction. Optionally, the offline instruction is used to implement one or more of data protection operations such as data erasure, data encryption, and data backup.

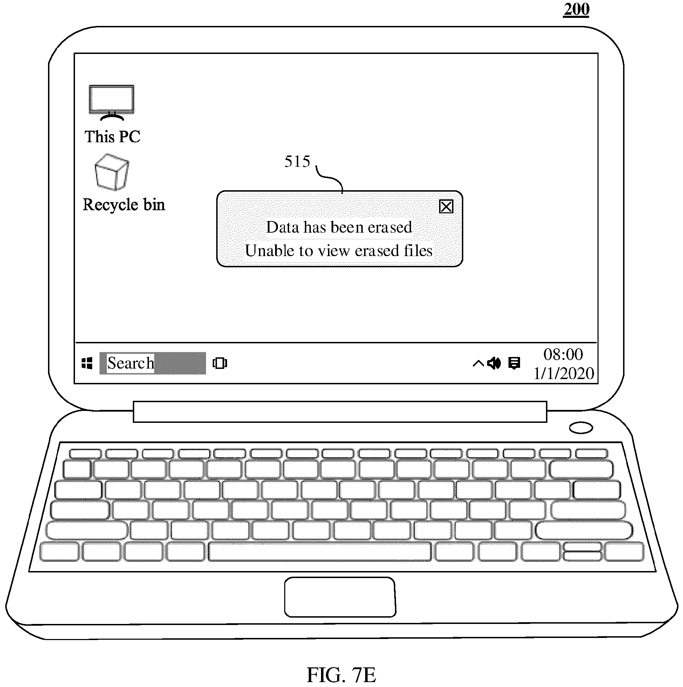

For example, as shown in FIG. 7E, after completing data erasure according to the offline instruction, the electronic device 200 may display prompt information 515, where the prompt information 515 is used to prompt that the electronic device 200 has performed data erasure. Optionally, the prompt information 515 is further used to prompt a type of the erased file.

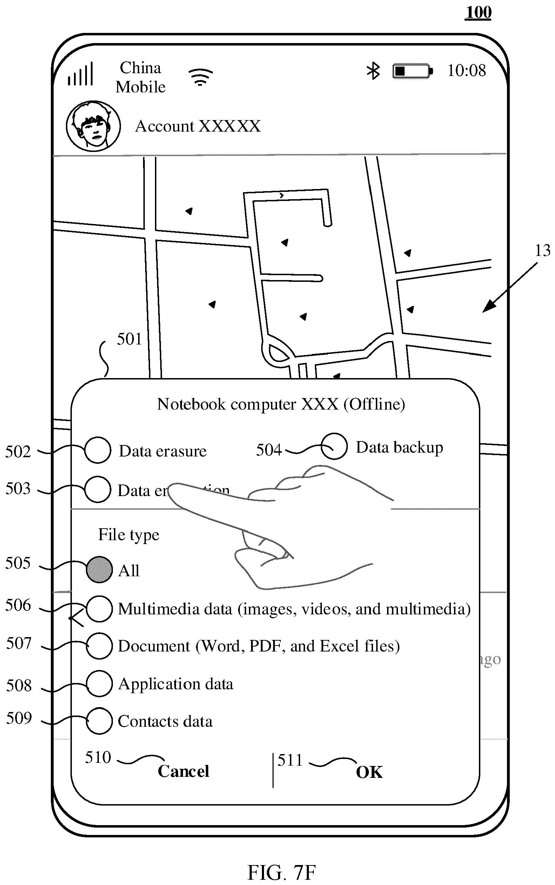

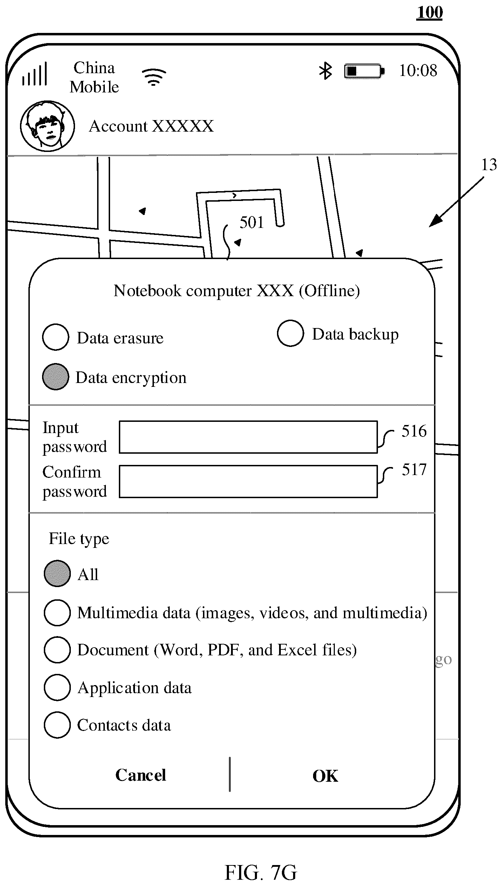

As shown in FIG. 7F and FIG. 7G, after the user selects the data encryption option 503, the electronic device 100 displays a password input box 516 and a password input box 517 in the pop-up window 501. The password input box 516 and the password input box 517 are used to set a password for the data encryption. Optionally, only one password input box for the data encryption may be displayed in the pop-up window 501. This is not specifically limited herein.

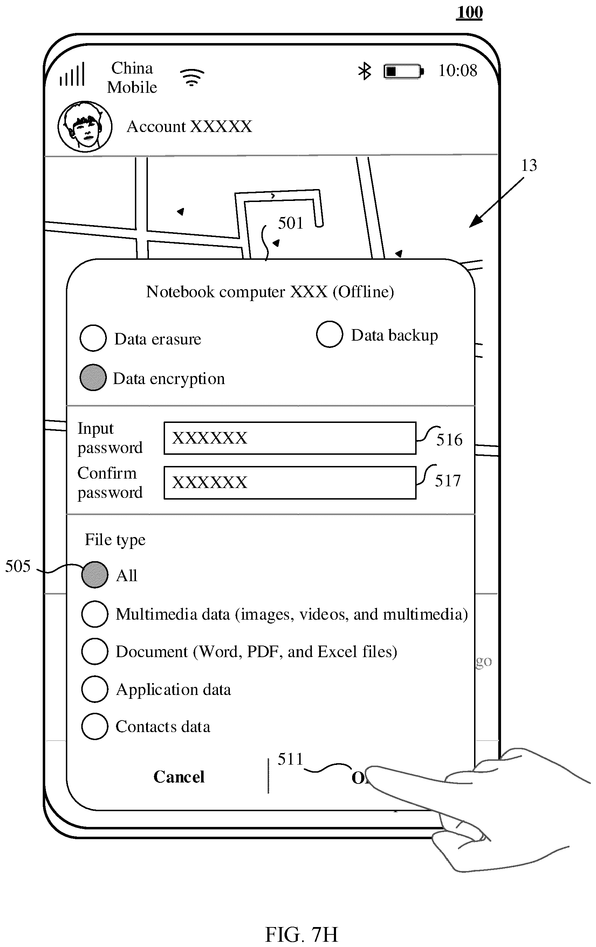

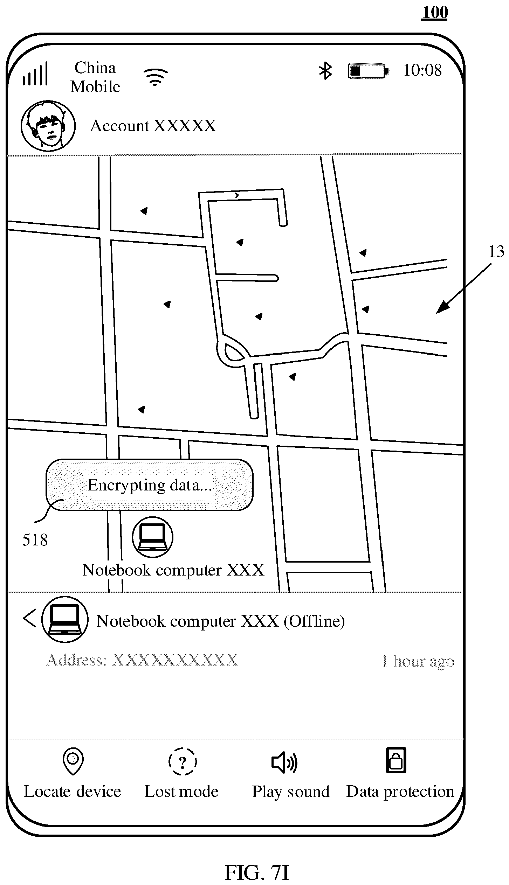

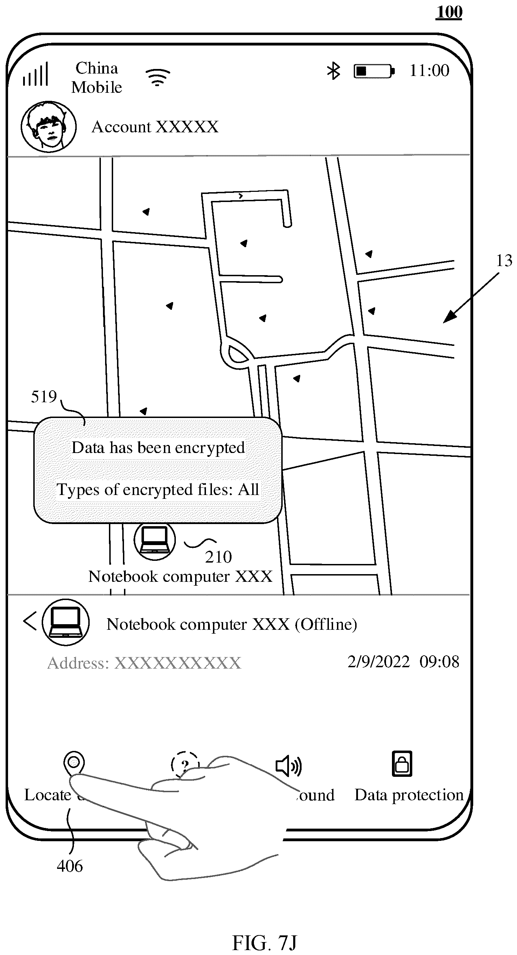

As shown in FIG. 7H and FIG. 7I, after the user inputs an encryption password in the password input box 516 and the password input box 517, and selects the all option 505, the OK control 511 receives the input operation (for example, the tap operation) of the user; and the electronic device 100 generates the offline instruction in response to the input operation, and displays prompt information 518. The offline instruction is used to perform data erasure on the file type selected by the user, and the prompt information 518 is used to prompt that the electronic device 200 is being instructed to perform data encryption. As shown in FIG. 7J, after the electronic device 200 completes data encryption according to the offline instruction, the electronic device 100 may display prompt information 519 based on the confirmation message fed back by the electronic device 200, where the prompt information 519 is used to prompt that the electronic device 200 has performed data encryption. Optionally, the prompt information 519 is further used to prompt a type of the encrypted file.

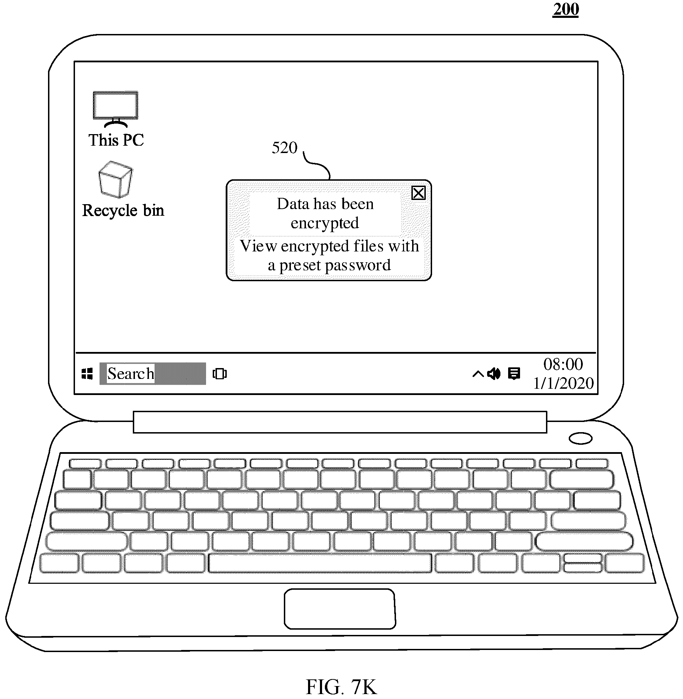

As shown in FIG. 7K, after completing data encryption according to the offline instruction, the electronic device 200 may display prompt information 520, where the prompt information 520 is used to prompt that the electronic device 200 has performed data encryption. Optionally, the prompt information 520 is further used to prompt the type of the encrypted file.

In some implementation solutions, when the electronic device 200 is offline, if there is an online nearby device near the electronic device 200, the electronic device 100 may further obtain and display an offline location of the electronic device 200 that is uploaded by the nearby device.

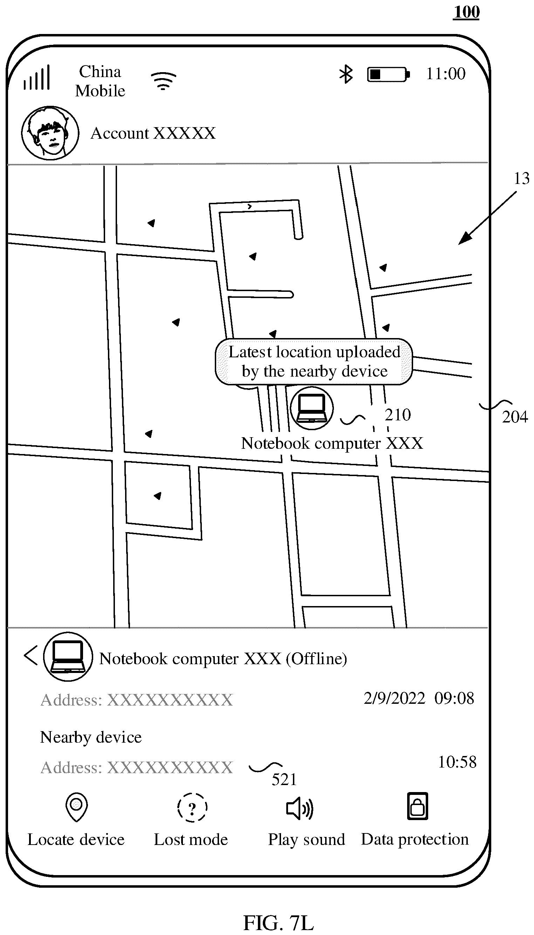

As shown in FIG. 7J and FIG. 7L, when the electronic device 200 is offline, the device positioning control 406 may receive the input operation (for example, the tap operation) of the user, and in response to the input operation, the electronic device 100 obtains and displays an address 521 generated based on an offline location uploaded by the nearby device 300, and may update a location of the device label 210 of the electronic device 200 in the map display area 204 based on the address.

In some implementation solutions, the user does not need to operate the device positioning control 406, and the electronic device 100 may also obtain and display the address 521, and update the location of the device label 210 of the electronic device 200 in the map display area 204 based on the address 521.

In some implementation solutions, an independent Find Device app may not be installed on the electronic device 100. A function provided by the Find Device app in FIG. 5G to FIG. 7L may also be implemented in a system setting of a system application of the electronic device 100, or may be implemented in a Find Device app of a web version. This is not specifically limited in embodiments of this application.

Based on the foregoing communication system, hardware structure, and application scenario, the following describes in detail the offline device control method provided in embodiments of this application.

In the offline device control method provided in embodiments of this application, the electronic device 100 and the lost device may be paired and bound in advance for device search. When the lost device is offline, the user may send the offline instruction for the lost device to the cloud server by using the electronic device 100 bound to the lost device. When receiving the assistance indication message that is for the lost device and that is uploaded by the online nearby device near the lost device, the cloud server sends the offline instruction of the electronic device 100 to the lost device via the nearby device, so that the lost device can execute the offline instruction. In this way, when the lost device is offline, the electronic device 100 can still control the lost device to execute a specific task, to avoid data loss and data leakage of the lost device and protect user privacy.

For example, FIG. 8A-1 and FIG. 8A-2 are a schematic flowchart of an offline device control method. The offline device control method includes but is not limited to step S101 to step S113.

S101: An electronic device 100 and an electronic device 200 perform pairing and binding for device search.

For example, refer to related descriptions in FIG. 5A to FIG. 5H. A Find Device app may be installed on the electronic device 100, and the electronic device 100 and the electronic device 200 may perform pairing and binding for device search by using the Find Device app. Details are not described herein again.

In some implementation solutions, during pairing and binding between the electronic device 100 and the electronic device 200, the electronic device 100 sends a pairing request to an application server (for example, a cloud server 400) of the Find Device app, where the pairing request is used to request pairing and binding with the electronic device 200. After interacting with the electronic device 100 and the electronic device 200, the cloud server 400 forwards the pairing request from the electronic device 100 to the electronic device 200 and forwards a pairing response from the electronic device 200 to the electronic device 100 only when determining that the electronic device 100 and the electronic device 200 log in to a same account (for example, an account 1).

S102: When the electronic device 200 is offline, the electronic device 100 receives an input operation 1, and generates an offline instruction in response to the input operation 1.

Refer to related descriptions in FIG. 6A to FIG. 7L. When a user confirms that the electronic device 200 is lost and the electronic device 200 is in an offline state, to avoid data loss or leakage of the electronic device 200, the user may trigger, by using a function control (for example, the lost mode control 407, the sound playing control 408, and the data protection control 409 shown in FIG. 6A) that corresponds to the electronic device 200 and that is provided by the Find Device app, the electronic device 100 to send an offline instruction, where the offline instruction instructs the electronic device 200 to perform one or more of the following operations: data erasure, data encryption, data backup, sound playing, and lost mode setting.

For example, the function control that corresponds to the electronic device 200 and that is provided by the Find Device app includes a function control 1.

In some implementation solutions, the electronic device 100 receives the input operation 1 for the function control 1, where the input operation 1 includes one or more operations; and if the electronic device 100 determines that the electronic device 200 is in the offline state, the electronic device 100 generates the offline instruction corresponding to the function control 1 in response to the input operation 1. Optionally, a message 1 includes the offline instruction. Optionally, the message 1 includes a ciphertext obtained after the offline instruction is encrypted.

For example, refer to related descriptions in FIG. 6A to FIG. 6E. The function control 1 may be the lost mode control 407, the input operation 1 may include a tap operation performed on the lost mode control 407, and the offline instruction instructs to set the electronic device to a lost mode. Optionally, the offline instruction specifically instructs to lock a screen of the electronic device. Optionally, the input operation 1 may further include an input operation of inputting, by the user, contact information in the contact information input box 411, an input operation of inputting a message in the message leaving input box 412, and an input operation performed on the OK control 415, the offline instruction further instructs to display the contact information and the message on a lock screen interface of the electronic device. Optionally, the input operation 1 may further include an input operation of inputting a lock screen password in the password input box 420 and the password input box 421. The offline instruction further instructs the electronic device to set a new lock screen password.

For example, refer to FIG. 6A. The function control 1 is the sound playing control 408, the input operation 1 includes a tap operation performed on the sound playing control 408, and the offline instruction instructs the electronic device to play sound.

For example, refer to related descriptions in FIG. 6E to FIG. 7K, the function control 1 is the data protection control 409, and the input operation 1 may include a tap operation performed on the playback data protection control 409, an input operation performed on a data protection option 1 (for example, the data erasure option 502), an input operation performed on at least one file type option (for example, the all option 505, or at least one of the option 506 to the option 509), and an input operation performed on the OK control 511. The offline instruction instructs to perform a data protection operation (for example, data erasure) corresponding to the data protection option 1 on a file type option selected by the user.

For example, refer to related descriptions in FIG. 7F to FIG. 7K. When the data protection option 1 is the data encryption option 503, the input operation 1 may further include an operation of inputting an encryption password by the user in the password input box 516 and the password input box 517.

S103: The electronic device 100 sends the message 1 to the cloud server 400, where the message 1 indicates the electronic device 200 to execute the offline instruction.

S104: When determining that the electronic device 200 is offline, the electronic device 200 broadcasts an offline broadcast 1 via a near field communication module.

In some implementation solutions, the near field communication module is a BLE communication module. The electronic device 200 enables a device search function. When being offline, the electronic device 200 periodically sends the offline broadcast 1 based on a preset period by using the BLE communication module.

In some implementation solutions, the electronic device 200 may query a network connection status of the electronic device 200. When determining, based on the network connection status, that the electronic device 200 is disconnected from a network, the electronic device 200 determines that the electronic device 200 is in the offline state. On the contrary, when determining, based on the network connection status, that the electronic device 200 is connected to the network, the electronic device 200 determines that the electronic device 200 is in an online state.

In some implementation solutions, when determining, based on the network connection status of the electronic device 200, that the electronic device 200 is disconnected from the network and/or the electronic device 200 is not connected to a SIM card, the electronic device 200 determines that the electronic device 200 is in the offline state. When determining, based on the network connection status, that the electronic device 200 is connected to the network and the electronic device 200 is connected to a SIM card, the electronic device 200 determines that the electronic device 200 is in the online state.

In some implementation solutions, the electronic device 200 may broadcast a heartbeat packet over the communication network 500. When the heartbeat packet fails to be sent, or response information fed back by another device (for example, the cloud server 400) based on the heartbeat packet is not received within preset duration, the electronic device 200 determines that the electronic device 200 is in the offline state. On the contrary, when the heartbeat packet is sent successfully, or response information fed back by another device based on the heartbeat packet is received within preset duration, the electronic device 200 determines that the electronic device 200 is in the online state. Optionally, the electronic device 200 may be a smart home device, a wearable device (for example, an over-ear headphone or a sports band), or the like.

S105: The online nearby device 300 scans an offline broadcast via the near field communication module.

In embodiments of this application, the nearby device 300 enables a device search function, and the online nearby device 300 may communicate with the cloud server 400. When the nearby device 300 is in the online state, the nearby device 300 scans an offline broadcast of a nearby device via the BLE communication module according to a preset scanning policy.

In some implementation solutions, when the nearby device 300 is in the online state, the nearby device 300 periodically scans, by using the BLE communication module, the offline broadcast based on a preset scanning period and scanning duration. For example, the scanning period is 600 ms, and the scanning duration is 100 ms.

S106: After obtaining the offline broadcast 1 from the electronic device 200 through scanning, the nearby device 300 sends a message 2 to the cloud server 400.

In some implementation solutions, the message 2 indicates that the nearby device 300 is capable of assisting the electronic device 200 in message transmission.

In some implementation solutions, after obtaining the offline broadcast 1 from the electronic device 200 through scanning, the nearby device 300 displays prompt information, where the prompt information is used to prompt the user whether to assist another device in performing offline control. The nearby device 300 sends the message 2 to the cloud server 400 only after receiving a confirm operation of the user.

It may be understood that all online nearby devices near the electronic device 200 may obtain the offline broadcast 1 via the near field communication module through scanning, and send an assistance indication message (that is, the foregoing message 2) to the cloud server 400.

S107: The cloud server 400 determines, based on the message 1 and the message 2, that the offline instruction indicated by the message 1 is used to control an offline device indicated by the message 2.

In embodiments of this application, the message 1 may carry indication information 1 indicating a target device of the offline instruction, and the message 2 may also carry indication information 2 indicating the offline device. The cloud server 400 matches the indication information 1 against the indication information 2. If the matching succeeds, the cloud server 400 determines that the offline instruction is used to control the offline device indicated by the message 2, and the online nearby device 300 is capable of assisting the offline device in data transmission.

Optionally, the indication information 1 and the indication information 2 are derived public keys of a public key generated when the electronic device 100 is bound to the electronic device 200 or hash values of the derived public keys. Optionally, the indication information 1 and the indication information 2 are device identifiers that may indicate the offline device. For example, the device identifier is a universal unique identifier (universal unique identifier, UUID), a unique device identifier (Unique Device Identifier, UDID), or the like.

A specific implementation is described in detail in a subsequent embodiment. Details are not described herein again.

S108: The cloud server 400 sends a message 3 to the nearby device 300, where the message 3 indicates the electronic device 200 to execute the offline instruction.

After receiving the message 2 sent by the nearby device 300, if determining, based on the message 2, that the nearby device 300 can assist in forwarding the offline instruction for the electronic device 200, the cloud server 400 sends the message 3 to the nearby device 300, expecting to forward the message 3 to the offline electronic device 200 via the nearby device 300, to indicate the electronic device 200 to execute the offline instruction from the electronic device 100.

S109: The nearby device 300 sends the message 3 to the electronic device 200 via the near field communication module.

In some implementation solutions, after receiving the message 3, when obtaining the offline broadcast 1 of the electronic device 200 again through scanning, the nearby device 300 establishes a communication connection to the electronic device 200 via the BLE communication module, and then sends the message 3 to the electronic device 200 based on the communication connection. It may be understood that, when the nearby device 300 approaching the offline electronic device 200 again, the nearby device 300 may forward the message 3 to the electronic device 200.

S 110: The electronic device 200 executes the offline instruction based on the message 3.

S 111: After executing the offline instruction, the electronic device 200 broadcasts a message 4 via the near field communication module, where the message 4 indicates that the offline instruction has been executed.

S112: After obtaining the message 4 through scanning via the near field communication module, the nearby device 300 sends the message 4 to the cloud server 400.

In some implementation solutions, after the electronic device 200 executes the offline instruction, if the communication connection between the electronic device 200 and the nearby device 300 is not disconnected, the electronic device 200 may also directly send the message 4 to the nearby device 300 through the communication connection.

S113: The cloud server 400 sends a message 5 to the electronic device 100, where the message 5 indicates that the offline instruction has been executed.

In some implementation solutions, the message 4 may be a SCAN_RSP message. The message 4 and the message 5 may be a same message, or may be different messages. This is not specifically limited herein.

Refer to related descriptions in FIG. 6A to FIG. 7K. After the electronic device 200 executes the offline instruction and feeds back a confirmation message, the electronic device 100 may display prompt information based on the confirmation message, to prompt the user that the electronic device 200 has executed the offline instruction.

For example, the message 4 and the message 5 may be the foregoing confirmation message. Refer to related descriptions in FIG. 6A to FIG. 6E, the user triggers, by using the lost mode control 407, the electronic device 100 to send the offline instruction, where the offline instruction instructs to set the electronic device 200 to the lost mode. The electronic device 100 displays the prompt information 417 in response to the confirmation message fed back by the electronic device 200, where the prompt information 417 is used to prompt that the electronic device 200 has been set to the lost mode. For example, refer to related descriptions in FIG. 7A to FIG. 7E. The user triggers, by using the data protection control 409, the electronic device 100 to send the offline instruction, where the offline instruction instructs to perform data erasure on a specific file type. The electronic device 100 displays the prompt information 514 in response to the confirmation message fed back by the electronic device 200, where the prompt information 514 is used to prompt that the electronic device 200 has completed data erasure. For example, refer to related descriptions in FIG. 7F to FIG. 7K. The offline instruction instructs to perform data encryption on the specific file type. The electronic device 100 displays the prompt information 518 in response to the confirmation message fed back by the electronic device 200, where the prompt information 518 is used to prompt that the electronic device 200 has completed data encryption.

In some implementation solutions, in step S106, the nearby device further obtains an offline location of the electronic device 200 in response to the offline broadcast 1 of the electronic device 200. The message 2 may be an offline positioning message, and the message 2 further indicates the offline location. Steps S114 and S115 may be further performed after step S106.

In some implementation solutions, the foregoing offline location is actually a location of the nearby device 300 that is obtained by a positioning module of the nearby device 300. Because the nearby device 300 is near the electronic device 200, the location of the nearby device 300 may be considered as a current offline location of the electronic device 200. Optionally, that the nearby device 300 obtains the offline location of the electronic device 200 specifically includes: The nearby device 300 invokes the positioning module of the nearby device 300 to obtain a current location of the nearby device 300, where the location is the foregoing offline location. Optionally, that the nearby device 300 obtains the offline location of the electronic device 200 specifically includes: The nearby device 300 uses a location of the nearby device 300 that is last obtained by the positioning module of the nearby device 300 as the offline location.

In some implementation solutions, the offline location is a location of the electronic device 200 that is obtained by the nearby device 300 through a near field positioning technology by using the location of the nearby device 300 as a reference location. Optionally, that the nearby device 300 obtains the offline location of the electronic device 200 specifically includes: The nearby device 300 obtains an orientation of the electronic device 200 and a distance from the electronic device 200 through the near field positioning technology (for example, a Bluetooth positioning technology). The nearby device 300 obtains location information of the nearby device 300 via the positioning module, and then obtains the current offline location of the electronic device 200 based on the orientation of the electronic device 200 and the distance from the electronic device 200 with reference to the location information of the nearby device 300.

S114: The cloud server 400 sends a message 6 to the electronic device 100, where the message 6 indicates the offline location of the electronic device 200.

S115: The electronic device 100 displays the offline location of the electronic device 200 based on the message 6.

Refer to related descriptions in FIG. 7J and FIG. 7L. After obtaining the offline location of the electronic device 200, the electronic device 100 may display the offline location of the electronic device 200 on the user interface 11, and may update the display location of the device label of the electronic device 200 in the map display area 204 based on the offline location of the electronic device 200.

In some implementation solutions of the offline device control method provided in embodiments of this application, the electronic device 100, the lost device, and the cloud server may negotiate with each other about a key for identity authentication in advance. In an offline control process, an offline instruction is encrypted and transmitted between every two devices by using a specific key for mutual identity authentication. In this way, a malicious device is prevented from forging and tampering with the offline instruction, thereby ensuring offline control security. In addition, in the offline control process, message transmission with a nearby device does not carry device information (for example, a device identifier) of a lost device and a finding device (that is, the electronic device 100). In this way, the lost device and the finding device can be prevented from being tracked, and the malicious device is prevented from forging and tampering with, by using the device information, messages from the lost device and the finding device, thereby ensuring security of offline control.

For example, FIG. 8B-1 to FIG. 8B-3 are a schematic flowchart of an offline device control method.

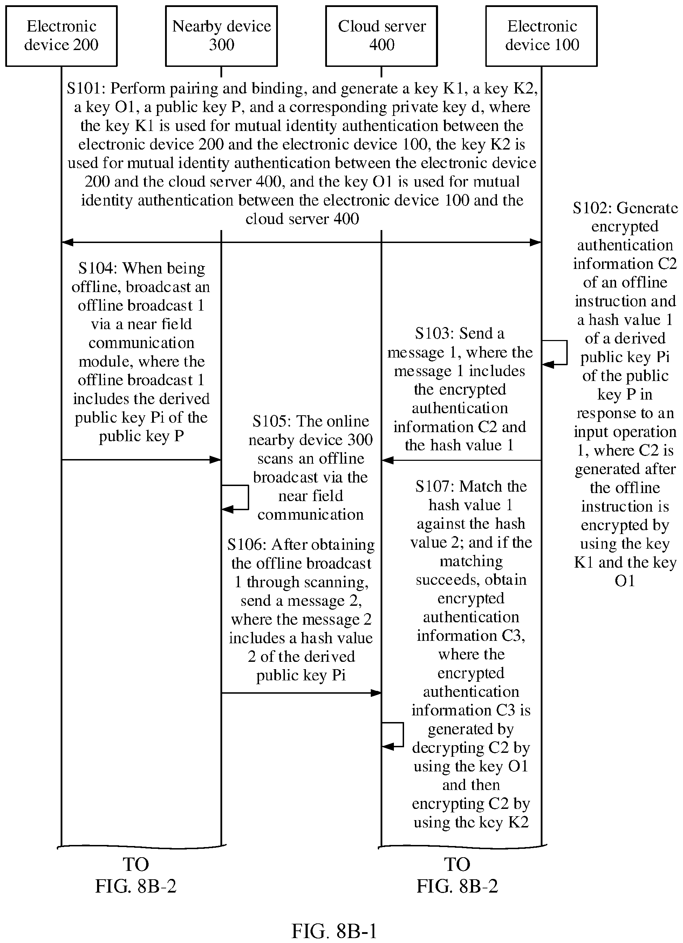

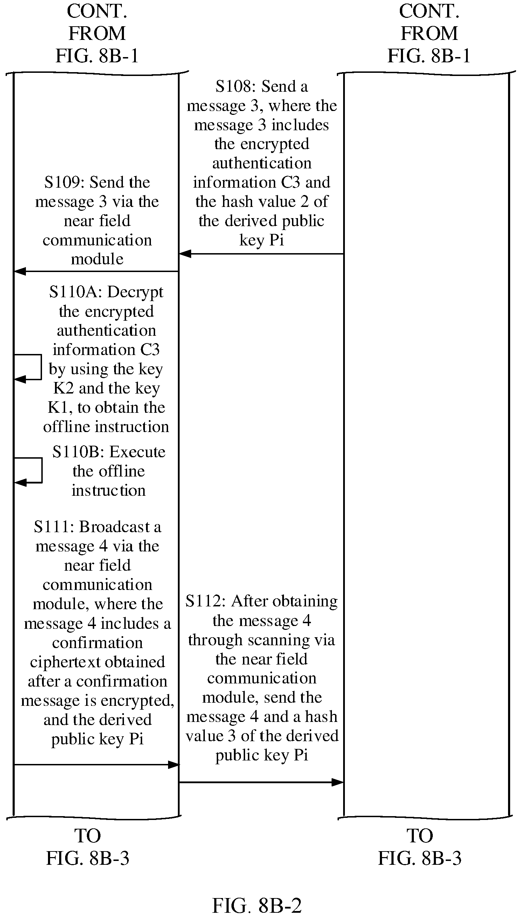

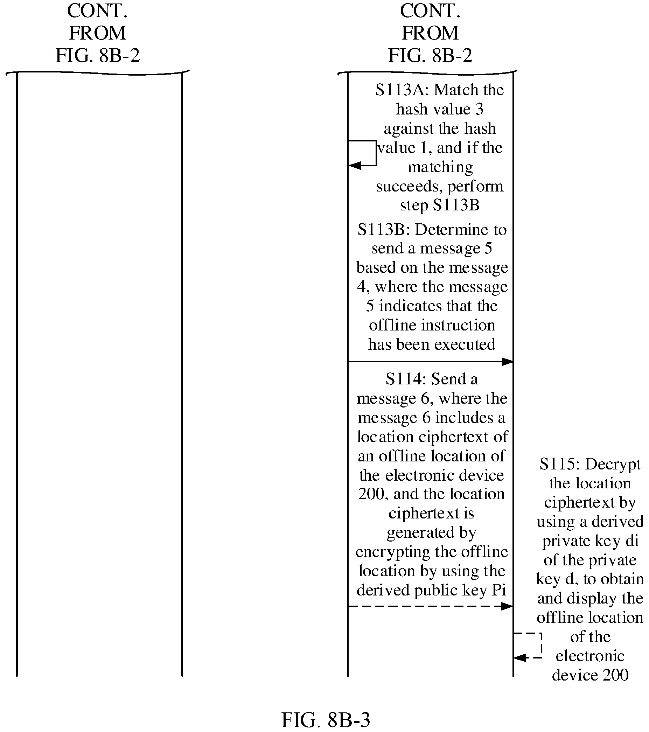

As shown in FIG. 8B-1, step S101 may specifically include: An electronic device 100 and an electronic device 200 perform pairing and binding for device search, and in a pairing and binding process, generate a key K1, a key K2, a key O1, a public key P, and a corresponding private key d, where the key K1 is used for mutual identity authentication between the electronic device 200 and the electronic device 100, the key K2 is used for mutual identity authentication between the electronic device 200 and a cloud server 400, and the key O1 is used for mutual identity authentication between the electronic device 100 and the cloud server 400.

Refer to FIG. 8C. In some implementation solutions, in the pairing process of the electronic device 100 and the electronic device 200, the electronic device 100, the electronic device 200, and the cloud server 400 perform three-party interaction, so that the electronic device 100 and the electronic device 200 separately generate the same key K1 based on a preset algorithm through between, and the electronic device 200 and the electronic device 100 hold the key K1, where the key K1 is used for mutual identity authentication between the electronic device 200 and the electronic device 100; the electronic device 100 and the cloud server 400 separately generate the same key O1 based on the preset algorithm, and the electronic device 100 and the cloud server 400 hold the key O1, where the key O1 is used by for mutual identity authentication between electronic device 100 and the cloud server 400; and the electronic device 200 and the cloud server 400 separately generate the same key K2 based on the preset algorithm, and the electronic device 200 and the cloud server 400 hold the key K2, where the key K2 is used for mutual identity authentication between electronic device 200 and the cloud server 400.

For example, the preset algorithm is an elliptic curve Diffie-Hellman key exchange (Elliptic Curve Diffie-Hellman key Exchange, ECDH) algorithm. According to the ECDH algorithm, two devices can negotiate a same key without sharing any privacy information, and the key generated by using the ECDH algorithm can transmit secure encrypted data in an insecure channel.

In some implementation solutions, in the pairing process of the electronic device 100 and the electronic device 200, the electronic device 100 further generates the public key P and the corresponding private key d. The electronic device 200 may hold the public key P, and the electronic device 100 may hold the private key d and the public key P. The private key d and the public key P may be used for encrypted transmission of information.

It should be noted that a public key (public key) and a private key (private key) are a key pair (that is, a public key and a private key) obtained by using an encryption algorithm. For example, the encryption algorithm may be an asymmetric encryption algorithm, for example, an elliptic curve cryptography (Elliptic Curve Cryptography, ECC), a Rivest-Shamir-Adleman (Rivest-Shamir-Adleman, RSA for short) algorithm, or a digital signature algorithm (digital signature algorithm, DSA). The key pair obtained by using the encryption algorithm is unique. The public key is a public part of the key pair and is open to the public. The private key is a non-public part and is not open to the public and needs to be stored on a local device. If the public key is used to encrypt data, the corresponding private key needs to be used to decrypt the data. If the private key is used to encrypt data, the corresponding public key needs to be used to decrypt the data.

Step S102 may specifically include: When the electronic device 200 is offline, the electronic device 100 receives an input operation 1, and generates encrypted authentication information C2 corresponding to an offline instruction and a hash value 1 of a derived public key Pi of the public key P in response to the input operation 1, where the encrypted authentication information C2 is generated after the offline instruction is encrypted sequentially by using the key K1 and the key O1.

In some implementation solutions, the electronic device 100 may alternatively upload the derived public key Pi or the hash value of the derived public key Pi in advance. For example, during binding between the electronic device 100 and the electronic device 200 for device search, after obtaining the public key P, the electronic device 100 uploads the public key Pi or the hash value of the derived public key Pi to the server.

In some implementation solutions, that the encrypted authentication information C2 is generated after the electronic device 100 encrypts the offline instruction sequentially by using the key K1 and the key O1 specifically includes: The electronic device 100 encrypts an offline instruction X by using the key K1, to generate encrypted authentication information C1; and the electronic device 100 encrypts the encrypted authentication information C1 by using the key O1, to generate the encrypted authentication information C2.

In some implementation solutions, an authenticated encryption with associated data (authenticated encryption with associated data, AEAD) algorithm is used for encryption. The AEAD algorithm is an encryption manner with an authentication function, and has confidentiality, integrity, and authentication. For example, C1=AEAD(K1, X), and C2=AEAD(O1, C1, AD=SN). An "AD=SN" field is an encryption field of the AEAD algorithm. AD (additional data) refers to additional information in the AEAD algorithm, and an SN (serial number) refers to a serial number in the AEAD algorithm.

For example, the offline instruction X is used to perform data erasure. X=file type∥erase∥fresh value T, where a first field in X indicates a type of a file to be erased, a second field in X indicates an operation performed by X, the fresh value T is a random number, and the fresh value T is used for encryption. C1=AEAD(K1, file type∥erase∥fresh value T).

In embodiments of this application, the hash value of the derived public key Pi is a hash value obtained by performing an operation on the derived public key Pi based on a preset hash algorithm. The hash algorithm is a function used to compress a message of any length into a message digest (that is, a hash value) of a fixed length. The hash value may be used to check message integrity and prevent the message from being tampered with.

It should be noted that after obtaining the public key P, both the electronic device 100 and the electronic device 200 derive the public key P at a fixed period, to generate a plurality of derived public keys Pi in a time dimension. It may be understood that the derived public keys Pi generated by the electronic device 100 and the electronic device 200 at a same moment are the same.

In some implementation solutions, in step S101, during binding between the electronic device 100 and the electronic device 200, the cloud server 400 may also obtain the public key P. In step S103, the cloud server 400 may generate the hash value 1 of the derived public key Pi of the public key P. In other words, the electronic device 100 does not need to upload the derived public key Pi or the hash value 1 to the cloud server 400.

Step S103 may specifically include: The electronic device 100 sends the message 1 to the cloud server 400, where the message 1 includes the encrypted authentication information C2 and the hash value 1.

For example, refer to FIG. 8C. After encrypting the offline instruction X sequentially by using the key K1 and the key O1, the electronic device 100 sends an encrypted ciphertext C2 to the cloud server 400. In embodiments of this application, the encrypted authentication information may also be referred to as a ciphertext.

It should be noted that the message 1 includes the hash value 1 of the derived public key Pi of the public key P held by the electronic device 200, and the hash value 1 in the message 1 may implicitly indicate that the offline instruction indicated by the message 1 is for the electronic device 200. The encrypted authentication information C2 and the hash value 1 may alternatively be separately sent. This is not specifically limited herein.

In some implementation solutions, the cloud server 400 may store, in an offline instruction database, a correspondence between a device identifier of each finding device, a device identifier of a lost device, encrypted authentication information of an uploaded offline instruction, and a hash value of a derived public key. For example, after receiving the message 1 sent by the electronic device 100 in step S103, the cloud server 400 stores, in the offline instruction database, a correspondence between a device identifier of the electronic device 100, a device identifier of the electronic device 200, the encrypted authentication information C2, and the hash value 1 of the derived public key Pi. The device identifier of the electronic device 200 may be carried in the message 1, or may be uploaded by the electronic device 100 to the cloud server 400 before step S103. This is not specifically limited herein.

In some implementation solutions, the electronic device 100 may pre-obtain hash values of a plurality of derived public keys in future preset duration (for example, one week), and upload the hash values to the cloud server 400. The hash value 1 includes the hash values of the plurality of derived public keys in the preset duration.

Step S104 may specifically include: When determining that the electronic device 200 is offline, the electronic device 200 broadcasts the offline broadcast 1 via the near field communication module, where the offline broadcast 1 includes the derived public key Pi of the public key P.

Refer to FIG. 8C. When being offline, the electronic device 200 may broadcast a BLE offline broadcast by using the BLE communication module.

Step S106 may specifically include: After obtaining the offline broadcast 1 from the electronic device 200 through scanning, the nearby device 300 sends the message 2 to the cloud server 400, where the message 2 includes a hash value 2 of the derived public key Pi.

It should be noted that the message 2 includes the hash value 2 of the derived public key Pi of the public key P held by the electronic device 200, and the hash value 2 in the message 2 may implicitly indicate that the message 2 is for the electronic device 200.

In some implementation solutions, the electronic device 200 may also directly broadcast the hash value 2 of the derived public key Pi by using the offline broadcast 1, so that the nearby device 300 does not need to calculate the hash value.

Step S107 may specifically include: The cloud server 400 matches the hash value 2 in the message 2 against the hash value 1 in the message 1. If the matching succeeds, the cloud server 400 obtains encrypted authentication information C3, where the encrypted authentication information C3 is generated by decrypting C2 by using the key O1 and then encrypting C2 by using the key K2.

Step S108 may specifically include: The cloud server 400 sends a message 3 to the nearby device 300, where the message 3 includes the encrypted authentication information C3 and the hash value 2 of the derived public key Pi.

In some implementation solutions, the cloud server 400 stores, in the offline instruction database, encrypted authentication information of an offline instruction sent by each electronic device and a corresponding hash value of a derived public key. After receiving the message 2, the cloud server 400 matches the hash value 2 in the message 2 with a hash value (for example, the hash value 1) corresponding to encrypted authentication information of each offline instruction in the offline instruction database. The hash value 1 that is successfully matched is obtained, and then a device identifier of the lost device (that is, the device identifier of the electronic device 100) and the encrypted authentication information C2 that correspond to the hash value 1 may be obtained.

In addition, the cloud server 400 further stores a correspondence between the device identifier of the electronic device 100 and the key O1 and a correspondence between the device identifier of the electronic device 200 and the key K2. Refer to FIG. 8C. The cloud server 400 obtains, based on the device identifier of the electronic device 100, the key O1 to decrypt the encrypted authentication information C2, to generate the encrypted authentication information C1. The cloud server 400 obtains, based on the device identifier of the electronic device 200, the key K2 to encrypt the encrypted authentication information C2, to generate the encrypted authentication information C3.

In some implementation solutions, that the foregoing matching succeeds means that the hash value 1 is equal to the hash value 2. In some implementation solutions, the hash value 1 includes the hash values of the plurality of derived public keys in the preset duration, and that the matching succeeds means that the hash value 2 is equal to one of the hash values of the plurality of derived public keys.

It should be noted that after the electronic device 100 is bound to the electronic device 200, both the electronic device 100 and the electronic device 200 hold the public key P, and may obtain the same derived public key Pi corresponding to the public key P. The hash value 1 of the derived public key Pi in the message 1 implies that the message 1 is for the electronic device 200, and the hash value 2 of the derived public key Pi in the message 2 implies that the message 2 is for the electronic device 200. If the hash value 1 matches the hash value 2, it may be determined that the offline instruction indicated by the electronic device 100 in the message 1 is for a device assisted by the nearby device 300, that is, the electronic device 200 implied by the hash value 2.

For example, C2=AEAD(O1, C1, AD=SN). The cloud server 400 decrypts C2 by using the key O1 to obtain C1, where O1⁻¹*C2=C1. Then, the cloud server 400 encrypts C1 by using the key K2 to obtain C3, where C3=AEAD(K2, C1, AD=SN).

It may be understood that the key O1 is used by the cloud server 400 to verify an identity of the electronic device 100 and determine that the encrypted authentication information C2 is from an authorized user. All nearby devices that assist the electronic device 200 in reporting may receive the encrypted authentication information of the offline instruction that is delivered by the cloud server 400.

Step S109 may specifically include: The nearby device 300 sends, based on the hash value 2 of the derived public key Pi in the message 3, the message 3 to the electronic device 200 via the near field communication module.

In some implementation solutions, the message 3 includes the hash value 2 of the derived public key Pi. After receiving the message 3, the nearby device 300 obtains the derived public key Pi in the offline broadcast 1 when obtaining the offline broadcast 1 of the electronic device 200 again through scanning. The nearby device 300 matches a hash value in the message 3 against the hash value of the derived public key Pi in the offline broadcast 1, and if the matching succeeds, sends the message 3 to the electronic device 200.

Refer to FIG. 8C. The cloud server 400 sends a ciphertext C3 to the electronic device 200 via the nearby device 300.

Step S110 may specifically include steps S110A and S110B.

S110A: The electronic device 200 decrypts the encrypted authentication information C3 in the message 3 by using the key K2 and the key K1, to obtain the offline instruction.

Specifically, refer to FIG. 8C. The electronic device 200 decrypts the encrypted authentication information C3 corresponding to the offline instruction X by using the key K2, to obtain the encrypted authentication information C1; and the nearby device 300 decrypts the encrypted authentication information C1 by using the key K1, to obtain the offline instruction X.

For example, C3=AEAD(K2, C1, AD=SN), and C1=AEAD(K1, X). The electronic device 200 decrypts K2 by using the key O1, to obtain C1, where K2⁻¹*C2=C1. Then, the electronic device 200 decrypts C1 by using the key K2, to obtain X, where K2⁻¹*C1=X.

It may be understood that the key K2 is used by the electronic device 200 to verify an identity of the cloud server 400, and the key K1 is used by the electronic device 200 to verify an identity of the electronic device 100.

S110B: The electronic device 200 executes the offline instruction.

Step S111 may specifically include: After executing the offline instruction, the electronic device 200 broadcasts a message 4 via the near field communication module, where the message 4 includes a confirmation ciphertext obtained after the confirmation message is encrypted, and the derived public key Pi, and the confirmation message indicates that the offline instruction has been executed.

Optionally, refer to FIG. 8C. The confirmation message may be a SCAN_RSP message.

Step S112 may specifically include: After the nearby device 300 obtains the message 4 through scanning via the near field communication module, the nearby device 300 sends the foregoing message 4 to the cloud server 400, where the message 4 includes a hash value 3 of the derived public key Pi.

Step S113 may specifically include steps S113 A and S113B.

S113A: The cloud server 400 matches the hash value 3 in the message 4 against the hash value 1 in the message 1, and if the matching succeeds, performs step S113B.

S113B: The cloud server 400 determines to send a message 5 to the electronic device 100 based on the message 4.

In some implementation solutions, refer to FIG. 8C. A confirmation ciphertext included in the message 4 is encrypted by using the key K2. Before the cloud server 400 sends the message 5, the server 400 decrypts the confirmation ciphertext by using the key K2 to obtain the confirmation message, where the message 5 includes the confirmation message.

In some implementation solutions, the message 4 includes a confirmation ciphertext D2, and the confirmation ciphertext D2 is encrypted sequentially by using the key K1 and the key K2. Before the cloud server 400 sends the message 5, after decrypting the confirmation ciphertext D2 by using the key K2, the cloud server 400 obtains a confirmation ciphertext D1 that is of the confirmation message and that is encrypted by using the key K1, where the message 5 includes the confirmation ciphertext D1. After receiving the message 5, the electronic device 100 decrypts the confirmation ciphertext D2 by using the key K1, to obtain the confirmation message.

In some implementation solutions, the message 4 includes the confirmation ciphertext D2, and the confirmation ciphertext D2 is encrypted sequentially by using the key K1 and the key K2. Before the cloud server 400 sends the message 5, after decrypting the confirmation ciphertext D2 by using the key K2, the cloud server 400 obtains the confirmation ciphertext D1 that is of the confirmation message and that is encrypted by using the key K1. The cloud server 400 encrypts the confirmation ciphertext D1 by using the key O1, to obtain a confirmation ciphertext D3 encrypted sequentially by using the key K1 and the key O1. The message 5 includes the confirmation ciphertext D3. After receiving the message 5, the electronic device 100 decrypts the confirmation ciphertext D3 by using the key O1, to obtain the confirmation ciphertext D3 encrypted by using the key K1. The electronic device 100 decrypts the confirmation ciphertext D2 by using the key K1, and obtains the confirmation message.

It may be understood that the cloud server 400 may authenticate the identity of the electronic device 200 by using the key K2, the electronic device 100 may authenticate the identity of the cloud server 400 by using the key O1, and the electronic device 100 may authenticate the identity of the electronic device 200 by using the key K1.

In some implementation solutions, the confirmation ciphertext included in the message 4 is encrypted by using the derived public key Pi of the public key P, and the message 5 also includes the confirmation ciphertext. After decrypting the confirmation ciphertext by using a derived private key di of the private key d, the electronic device 200 obtains the confirmation message.

In some implementation solutions, in step S102, the electronic device 100 may alternatively upload the derived public key Pi instead of the hash value of the derived public key Pi to the cloud server 400 by using the message 1. In step S106, the nearby device 300 may also upload the derived public key Pi instead of the hash value of the derived public key Pi to the cloud server 400 by using the message 2. In step S107, the cloud server 400 matches the derived public key in the message 1 against the derived public key in the message 2, and if the matching succeeds, obtains the encrypted authentication information C3.

In some implementation solutions, the message 2 may be an offline positioning message. In step S106, the message 2 sent by the nearby device 300 may include a location ciphertext of an offline location of the electronic device 200, and the location ciphertext is generated by encrypting the offline location by using the derived public key Pi and an encryption algorithm. Steps S114 and S115 may be further performed after step S106.

In step S114, a message 6 delivered by the cloud server 400 to the electronic device 100 includes the location ciphertext of the offline location of the electronic device 200.

In step S115, the electronic device 100 decrypts the location ciphertext by using the derived private key di of the private key d, to obtain and display the offline location of the electronic device 200.

In conclusion, when none of the offline broadcast 1, the message 2, and the message 3 exchanged with the nearby device 300 carries the device identifier of the electronic device 100, matching of the derived public key Pi or matching of the hash value of the derived public key Pi is used, so that the encrypted authentication information for the offline instruction of the electronic device 200 may be obtained, and forwarded to the electronic device 200 via the nearby device 300.

In some implementation solutions, in the offline control method, related information (for example, the derived public key of the public key P or the hash value of the derived public key) of the public key P may not implicitly indicate the electronic device 200. For message exchange between the electronic device 100, the electronic device 200, the nearby device 300, and the cloud server 400, the electronic device 200 may be indicated by using the device identifier of the electronic device 200, and the electronic device 100 may be indicated by using the device identifier of the electronic device 100. This is not specifically limited in embodiments of this application. The following provides an example for description. An example is as follows:

In step S103, the message 1 includes encrypted authentication information C2 and a device identifier 1 of the lost device (that is, the device identifier of the electronic device 200), and the device identifier 1 indicates that the offline instruction indicated by the message 1 is for the electronic device 200.

In step S104, the offline broadcast 1 includes the device identifier 1 of the electronic device 200.

In step S106, the message 2 includes the device identifier 1 of the lost device (that is, the device identifier of the electronic device 200), the device identifier 1 indicates that the message 2 is for the electronic device 200, and the message 2 indicates that the nearby device 300 can assist the electronic device 200 in message transmission.

In step S107, the encrypted authentication information C2 of the offline instruction corresponding to the device identifier 1 (that is, the device identifier of the electronic device 200) is obtained based on the device identifier 1 in the message 2 and the device identifier 1 in the message 1, and the encrypted authentication information C3 is obtained based on the encrypted authentication information C2 of the offline instruction.

In step S108, the message 3 includes the device identifier 1 of the lost device and the encrypted authentication information C3. The device identifier 1 indicates that the offline instruction indicated by the message 3 is for the electronic device 200.

In step S109, the nearby device 300 sends the message 3 to the electronic device 200 based on the device identifier 1 in the message 3 via the near field communication module.

In step S111, the message 4 includes the device identifier 2 of the finding device (that is, the device identifier of the electronic device 100), and the device identifier 2 indicates that the confirmation message indicated by the message 4 is sent to the electronic device 100.

In step S113, the cloud server 400 sends the message 5 to the electronic device 100 based on the device identifier 2 in the message 4.

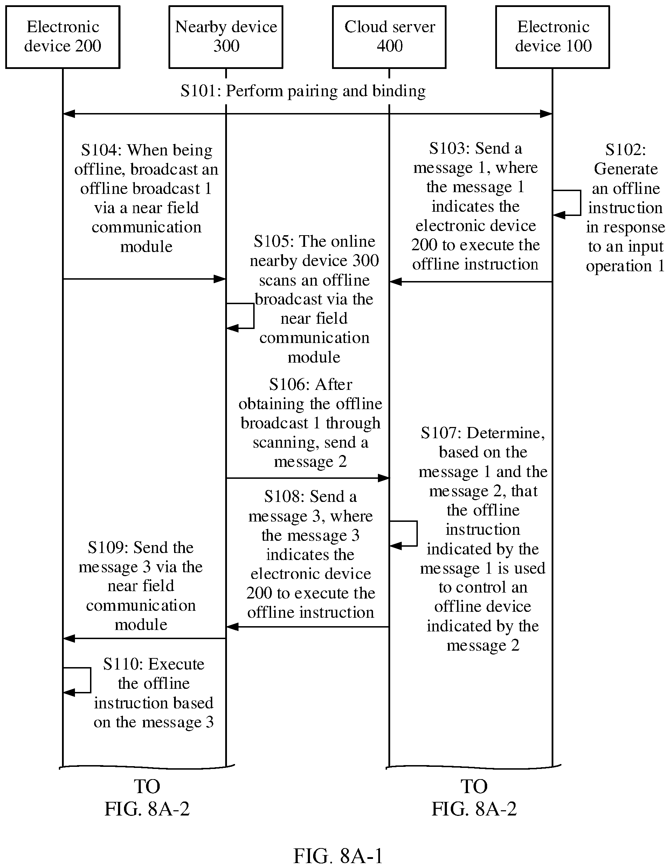

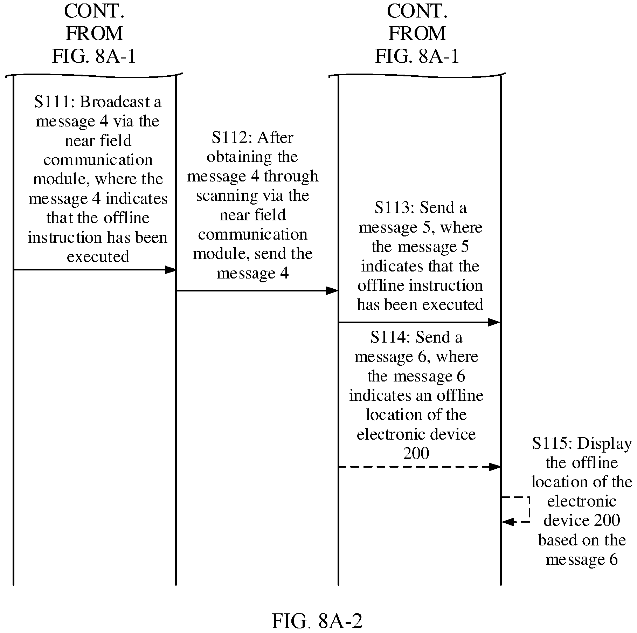

For specific implementations, refer to related descriptions of the offline device control methods shown in FIG. 8A-1 to FIG. 8B-3. Details are not described herein again.

The following describes a software structure of the electronic device 100. For software structures of the electronic device 100 and the nearby device 200, refer to the software structure of the electronic device 100. Details are not described subsequently.

For example, a software system of the electronic device 100 may use a layered architecture, an event-driven architecture, a microkernel architecture, a micro service architecture, or a cloud architecture. In embodiments of the present invention, an Android system with a layered architecture is used as an example to describe the software structure of the electronic device 100. FIG. 9A is a block diagram of a software structure of the electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 9A, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions. As shown in FIG. 9A, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls like a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in a status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of a graph or a scroll bar text, for example, a notification of an application that is run in the background, or may be a notification that appears on a screen in a form of a dialog window. For example, text information is displayed in the status bar, an alert tone is given, the terminal vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an offline control system according to an embodiment of this application.

For example, FIG. 9B shows an offline control system according to an embodiment of this application. As shown in FIG. 9B, the offline control system includes an electronic device 100, an electronic device 200, a nearby device 300, and a cloud server 400.

Application layers of the electronic device 100, the electronic device 200, and the nearby device 300 each include a Find Device app, application framework layers include device-side network search services, and system modules include network modules and near field communication modules (for example, a BLE communication module). In an implementation, the electronic device 200 and the nearby device 300 have device-side network search services, and the Find Device app may not be installed on the electronic device 200 and the nearby device 300. The electronic device 200 and the nearby device 300 communicate with the cloud server 400 by using the device-side network search service. The cloud server 400 includes a cloud-side network search service.

The Find Device app is used to receive an input operation of a user, to implement pairing and binding of network search services between devices, trigger this device to query an offline location of a lost device, and trigger this device to deliver an offline instruction for controlling the lost device. The offline instruction instructs the lost device to perform one or more of the following: data erasure, data encryption, data backup, sound playing, lost mode setting, and the like.

The device-side network search service is used to provide a service like pairing and binding for network search, encryption and decryption of the offline instruction and the offline location, assisting an offline device in reporting a message, storing the offline instruction delivered by the cloud, and forwarding the offline instruction from the cloud to lost device.

The network module may be a network module corresponding to the communication network 500, and is responsible for providing a network connection service, to implement communication between this device and the cloud server 400.

The near field communication module (for example, the BLE communication module) is used to provide services such as offline broadcast with low power consumption, offline broadcast scanning, and general attribute profile (General Attribute Profile, GATT) connection, where GATT is a BLE service interface protocol.

The cloud-side network search service is used to encrypt and decrypt the offline instruction, store the offline instruction, deliver the offline instruction, store a location ciphertext, deliver a location ciphertext, and query the offline location.

The offline control method in embodiments of this application is described by using an example based on the offline control system shown in FIG. 9B.
(1) After the electronic device 100 establishes a communication connection with the electronic device 200 by using the BLE communication module, the Find Device app of the electronic device 100 invokes the device-side network search service to trigger a pairing procedure with the electronic device 200. The foregoing pairing procedure includes that the device-side network search service of the electronic device 100 invokes the network module to send a pairing request to the cloud server 400, where the pairing request is used to request to establish a binding relationship with the electronic device 200 for network search service.
   In some implementation solutions, the foregoing pairing procedure further includes: The electronic device 100 and the electronic device 200 separately generate a same key K1 based on a preset algorithm, the electronic device 100 and the cloud server 400 separately generate a same key O1 based on the preset algorithm, and the electronic device 200 and the cloud server 400 separately generate a same key K2 based on the preset algorithm.
(2) The Find Device app of the electronic device 100 receives an input operation 1 of a user; the Find Device app generates, in response to the input operation 1, an offline instruction for the offline electronic device 200; and the Find Device app invokes device-side network search service to report the offline instruction to the cloud server 400 via the network module. After receiving the offline instruction, the cloud-side network search service of the cloud server 400 stores the offline instruction.
   In some implementation solutions, the device-side network search service of the electronic device 100 is further used to encrypt the offline instruction by using the key K1 and the key O1, and invoke the network module to report the encrypted offline instruction to the cloud server 400.
(3) When determining that the electronic device 200 is offline, the device-side network search service of the electronic device 200 invokes the BLE communication module to broadcast an offline broadcast 1. When the nearby device 300 is online, the device-side network search service of the nearby device 300 invokes the BLE communication module to scan an offline broadcast of another device according to a preset scanning policy, to obtain the offline broadcast 1 through scanning.
(4) The BLE communication module of the nearby device 300 reports the offline broadcast 1 to the device-side network search service of this device, and the device-side network search service invokes the network module of this device to send an assistance indication message (that is, the foregoing message 2) to the cloud server 400, the assistance indication message indicates that the nearby device 300 can assist the electronic device 200 in data transmission.
(5) After receiving the assistance indication message, the cloud-side network search service of the cloud server 400 delivers the foregoing offline instruction to the nearby device 300.
   In some implementation solutions, the cloud-side network search service of the cloud server 400 is further used to decrypt, by using the key O1, the offline instruction reported by the electronic device 100, encrypt the offline instruction by using the key K2, and then deliver, to the nearby device 300, the offline instruction encrypted by using the key K1 and the key K2.
(6) The network module of the nearby device 300 receives the offline instruction, and sends the offline instruction to the device-side network search service of the nearby device 300. The device-side network search service invokes the BLE communication module of the nearby device 300 to send the offline instruction to the electronic device 200.
(7) After receiving the offline instruction, the BLE communication module of the electronic device 200 sends the offline instruction to the device-side network search service of the electronic device 200; the device-side network search service sends the offline instruction to the Find Device app of the electronic device 200; and the Find Device app executes the offline instruction.

In some implementation solutions, the device-side network search service of the electronic device 200 is further used to decrypt, by using the key K2 and the key K1, the offline instruction sent by the nearby device 300, to obtain the decrypted original offline instruction.

In embodiments of this application, the first electronic device may also be the foregoing electronic device 100, the second electronic device may be the foregoing electronic device 200, the third electronic device may be the foregoing electronic device 300, and the server may be the foregoing cloud server 400. The first identifier may be the network connection identifier of the electronic device 200.

The first message may be the foregoing message 1, the first offline message may be the foregoing offline broadcast 1, the second offline message may be the foregoing offline broadcast 2, the first instruction may be the foregoing offline instruction, the second message may be the foregoing message 2, the third message may be the foregoing message 3, the fourth message and the fifth message may be the foregoing message 4, and the sixth message may be the foregoing message 5.

The first input operation may be the foregoing input operation 1, and the first function control may be a function control shown in FIG. 6A, for example, the lost mode control 407, the sound playing control 408, and the data protection control 409. The first account may be the foregoing account 1.

For example, the first function control is the lost mode control 407, the first instruction is used to set the lost mode, the first prompt information may be the prompt information 416 shown in FIG. 6D, and the second prompt information may be the prompt information 417 shown in FIG. 6E.

For example, the first function control is the data protection control 409, the first instruction is used to implement data erasure, the first prompt information may be the prompt information 513 shown in FIG. 7C, the second prompt information may be the prompt information 514 shown in FIG. 7D, and the third prompt information may be the prompt information 515 shown in FIG. 7E.

For example, the first function control is the data protection control 409, the first instruction is used to implement data encryption, the first prompt information may be the prompt information 518 shown in FIG. 7I, the second prompt information may be the prompt information 519 shown in FIG. 7J, the third prompt information may be the prompt information 520 shown in FIG. 7K, the first option may be the all option 505, or at least one of the option 506 to the option 509, and the OK control may be the OK control 511.

The first key may be the foregoing key K1, the second key may be the foregoing key K2, and the third key may be the foregoing key O1. The first ciphertext may be the foregoing encrypted authentication information C1, the second ciphertext may be the foregoing encrypted authentication information C2, and the third ciphertext may be the foregoing encrypted authentication information C3. For example, the fourth ciphertext may be the foregoing confirmation ciphertext. For example, the fourth ciphertext may be the foregoing confirmation ciphertext D2, and the fifth ciphertext may be the foregoing confirmation ciphertext D3.

For example, the fourth key may be the foregoing public key P, and the indication information of the derived public key may be the derived public key, or may be the hash value of the derived public key. For example, the first indication information may be the foregoing indication information 1 (for example, the derived public key Pi or the hash value 1), and the second indication information may be the foregoing indication information 2 (for example, the derived public key Pi or the hash value 2).

The implementations of this application may be randomly combined to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the procedures of the methods in embodiments may be implemented by a computer program instructing relevant hardware. The program may be stored in a computer-readable storage medium. When the program is run, the procedures of the methods in embodiments are performed. The foregoing storage medium includes any medium that can store program code, like a ROM or a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. An offline device control method, applied to an offline device control system, wherein the system comprises a second electronic device, a third electronic device, and a server, and the second electronic device is in an offline state; and the method comprises:
obtaining, by the server, a first message, wherein the first message indicates the second electronic device to execute a first instruction;
broadcasting, by the second electronic device, a first offline message via a near field communication module;
obtaining, by the third electronic device, the first offline message;
sending, by the third electronic device, a second message to the server in response to the first offline message;
sending, by the server, a third message to the third electronic device after receiving the second message, wherein the third message indicates the second electronic device to execute the first instruction;
sending, by the third electronic device, the third message to the second electronic device; and
executing, by the second electronic device, the first instruction based on the third message.

2. The method according to claim 1, wherein the system further comprises a first electronic device, and before the obtaining, by the server, a first message, the method further comprises:
receiving, by the first electronic device, a first input operation of a user; and
sending, by the first electronic device, the first message to the server in response to the first input operation.

3. The method according to claim 2, wherein before the receiving, by the first electronic device, a first input operation of a user, the method further comprises:
displaying, by the first electronic device, a first interface of a first application, wherein the first interface comprises a first function control, and the first function control is used to trigger the first electronic device to generate the first instruction used to control the second electronic device; and
the receiving, by the first electronic device, a first input operation of a user comprises:
receiving, by the first electronic device, the first input operation of the user for the first function control, wherein the first input operation comprises one or more operations.

4. The method according to claim 3, wherein the first interface further comprises a first identifier of the second electronic device, and the first identifier indicates that the second electronic device is currently in the offline state.

5. The method according to claim 1, wherein the second message indicates that the third electronic device is capable of assisting the offline second electronic device in message transmission.

6. The method according to claim 1 or 5, wherein the second message indicates an offline location of the second electronic device that is obtained by the third electronic device.

7. The method according to claim 1, wherein the method further comprises:
sending, by the second electronic device, a fourth message via the near field communication module after executing the first instruction, wherein the fourth message indicates that the second electronic device has executed the first instruction;
receiving, by the third electronic device, the fourth message;
sending, by the third electronic device, a fifth message to the server, wherein the fifth message indicates that the second electronic device has executed the first instruction; and
sending, by the server, a sixth message to the first electronic device, wherein the sixth message indicates that the second electronic device has executed the first instruction.

8. The method according to claim 3, wherein the method further comprises:
displaying, by the first electronic device, first prompt information in response to the first input operation, wherein the first prompt information is used to prompt that the offline second electronic device is being indicated to execute the first instruction.

9. The method according to claim 3, wherein the method further comprises:
after receiving the sixth message, displaying, by the first electronic device, second prompt information based on the sixth message, wherein
the second prompt information is used to prompt that the second electronic device has executed the first instruction.

10. The method according to claim 1, wherein the first instruction is used to implement one or more of the following operations: data erasure, data encryption, data backup, screen locking, display of preset lock screen information, and playing of preset audio.

11. The method according to claim 3, wherein the first input operation comprises a second input operation, a third input operation, and a fourth input operation; and
the receiving, by the first electronic device, a first input operation of a user comprises:
receiving, by the first electronic device, the second input operation performed on the first function control;
displaying, by the first electronic device, an OK control and at least two file type options in response to the second input operation, wherein the at least two file type options comprise a first option;
receiving, by the first electronic device, the third input operation performed on the first option; and
receiving, by the first electronic device, the fourth input operation performed on the OK control, wherein
the first instruction is used to implement one or more of data protection operations such as data erasure, data encryption, and data backup, the first instruction further comprises a type of a file for which the data protection operation is performed, and the type of the file for which the data protection operation is performed comprises a file type corresponding to the first option.

12. The method according to claim 10 or 11, wherein the first instruction is used to implement one or more of the data protection operations such as data erasure, and data encryption; and
after the executing, by the second electronic device, the first instruction based on the third message, the method further comprises:
displaying, by the second electronic device, third prompt information, wherein the third prompt information is used to prompt that the second electronic device has executed the first instruction.

13. The method according to claim 1, wherein the sending, by the third electronic device, the third message to the second electronic device comprises:
after receiving the third message, sending, by the third electronic device, the third message to the second electronic device via the near field communication module when obtaining, through scanning, a second offline message broadcast by the second electronic device.

14. The method according to claim 2, wherein before the receiving, by the first electronic device, a first input operation of a user, the method further comprises:
logging in to, by the first electronic device, a first account of a first application, and logging in to, by the second electronic device, the first account of the first application; and
establishing, by the first electronic device, a binding relationship with the second electronic device based on the first account of the first application.

15. The method according to any one of claims 2 to 14, wherein the first electronic device and the second electronic device hold a first key, and the first key is used for mutual identity authentication between the first electronic device and the second electronic device; the second electronic device and the server hold a second key, and the second key is used for mutual identity authentication between the second electronic device and the server; and the first electronic device and the server hold a third key, and the third key is used for mutual identity authentication between the first electronic device and the server;
the first message comprises a second ciphertext, wherein the second ciphertext is generated after the first electronic device encrypts the first instruction sequentially by using the first key and the third key;
the third message comprises a third ciphertext, wherein the third ciphertext is generated after the server decrypts the second ciphertext by using the third key and then encrypts the second ciphertext by using the second key; and
the first instruction is obtained after the second electronic device decrypts the third ciphertext by using the second key and the first key.

16. The method according to claim 15, wherein
the fourth message and the fifth message comprise a fourth ciphertext of a confirmation message, the fourth ciphertext is generated after the second electronic device encrypts the confirmation message by using the second key, and the confirmation message indicates that the second electronic device has executed the first instruction; and
the sixth message comprises the confirmation message, and the confirmation message is obtained after the server decrypts the fourth ciphertext by using the second key.

17. The method according to claim 15, wherein
the fourth message and the fifth message comprise a fourth ciphertext of a confirmation message, the fourth ciphertext is generated after the second electronic device encrypts the confirmation message sequentially by using the first key and the second key, and the confirmation message indicates that the second electronic device has executed the first instruction;
the sixth message comprises a fifth ciphertext of the confirmation message, and the fifth ciphertext is generated after the server decrypts the fourth ciphertext by using the second key and then encrypts the fourth ciphertext by using the third key; and
the method further comprises:
after receiving the sixth message sent by the server, decrypting, by the first electronic device, the fifth ciphertext sequentially by using the third key and the first key, to obtain the confirmation message.

18. The method according to claim 15, wherein before receiving the first input operation of the user, the first electronic device establishes the binding relationship with the second electronic device, wherein the first key, the second key, and the third key are generated during binding between the first electronic device and the second electronic device; and the server stores a first correspondence between a second device identifier of the second electronic device and the second key, and a second correspondence between a first device identifier of the first electronic device and the third key.

19. The method according to claim 18, wherein a fourth key is further generated during binding between binding the first electronic device and the second electronic device, and both the first electronic device and the second electronic device hold the fourth key;
the first message further comprises first indication information of a derived key of the fourth key and the second device identifier of the second electronic device; and after the server receives the first message, the server stores a third correspondence between the second ciphertext, the first indication information, and the second device identifier based on the first message;
the first offline message further comprises the derived key of the fourth key;
the second message further comprises second indication information of the derived key of the fourth key; and
before the sending, by the server, a third message to the third electronic device, the method further comprises:
matching, by the server, the first indication information against the second indication information; and when the first indication information successfully matches the second indication information, generating, by the server, the third ciphertext based on the second ciphertext corresponding to the first indication information.

20. The method according to claim 19, wherein the generating, by the server, the third ciphertext based on the second ciphertext corresponding to the first indication information comprises:
determining, based on the third correspondence, that a device identifier of a target device corresponding to the first indication information is the second device identifier of the second electronic device; determining, based on the first correspondence, the third key used for identity authentication of the first electronic device; and determining, based on the second correspondence, the second key used for identity authentication of the second electronic device; and
decrypting, by the server, the second ciphertext by using the third key, to obtain the decrypted first ciphertext, and then encrypting the first ciphertext by using the second key, to obtain the encrypted third ciphertext.

21. The method according to claim 19, wherein the third message further comprises the first indication information of the derived key of the fourth key, and after the third electronic device receives the third message, the method further comprises:
obtaining, by the third electronic device through scanning, the second offline message broadcast by the second electronic device, wherein the second offline message comprises the derived key of the fourth key; and
the sending, by the third electronic device, the third message to the second electronic device comprises:
sending, by the third electronic device, the third message to the second electronic device via the near field communication module if indication information of the derived key of the fourth key in the second offline message successfully matches the first indication information.

22. An offline device control method, applied to a server, and comprising:
obtaining, by the server, a first message, wherein the first message indicates a second electronic device to execute a first instruction;
receiving, by the server, a second message sent by a third electronic device, wherein the second message is sent after the third electronic device obtains, through scanning via a near field communication module, a first offline message broadcast by the second electronic device, and the first offline message is broadcast when the second electronic device is in an offline state; and
sending, by the server, a third message to the offline second electronic device via the third electronic device after receiving the second message, wherein the third message indicates the second electronic device to execute the first instruction.

23. The method according to claim 22, wherein the obtaining, by the server, a first message comprises:
receiving, by the server, the first message sent by a first electronic device.

24. The method according to claim 22, wherein the second message indicates that the third electronic device is capable of assisting the offline second electronic device in message transmission.

25. The method according to claim 22 or 24, wherein the second message indicates an offline location of the second electronic device that is obtained by the third electronic device.

26. The method according to claim 22, wherein the first instruction is used to implement one or more of the following operations: data erasure, data encryption, data backup, screen locking, display of preset lock screen information, and playing of preset audio.

27. The method according to claim 26, wherein when the first instruction is used to implement one or more of data protection operations such as data erasure, data encryption, and data backup, the first instruction comprises a type of a file for which the data protection operation is performed.

28. The method according to claim 23, wherein before the obtaining, by the server, a first message, the method further comprises:
receiving, by the server, a binding request of the first electronic device and/or the second electronic device, wherein the binding request is used to request to establish a binding relationship between the first electronic device and the second electronic device based on a first account of a first application, and both the first electronic device and the second electronic device log in to the first account.

29. An offline device control method, applied to a second electronic device in an offline state, wherein the method comprises:
broadcasting, by the second electronic device in the offline state, a first offline message via a near field communication module;
receiving, by the second electronic device, a third message sent by a server via a nearby online third electronic device, wherein the third message is sent after the server obtains a second message of the third electronic device and a first message, the second message is sent after the third electronic device receives the first offline message, and the first message and the third message indicate the second electronic device to execute a first instruction; and
executing, by the second electronic device, the first instruction based on the third message.

30. The method according to claim 29, wherein the first message is sent by a first electronic device to the server.

31. The method according to claim 29, wherein the second message indicates that the third electronic device is capable of assisting the offline second electronic device in message transmission.

32. The method according to claim 29 or 31, wherein the second message indicates an offline location of the second electronic device that is obtained by the third electronic device.

33. The method according to claim 29, wherein the method further comprises:
sending, by the second electronic device, a seventh message to the server via the third electronic device after executing the first instruction, wherein the seventh message indicates that the second electronic device has executed the first instruction.

34. The method according to claim 29, wherein the first instruction is used to implement one or more of the following operations: data erasure, data encryption, data backup, screen locking, display of preset lock screen information, and playing of preset audio.

35. The method according to claim 34, wherein when the first instruction is used to implement one or more of data protection operations such as data erasure, data encryption, and data backup, the first instruction comprises a type of a file for which the data protection operation is performed.

36. The method according to claim 29 or 35, wherein the first instruction is used to implement one or more of the data protection operations such as data erasure, data encryption, and data backup; and
after the executing, by the second electronic device, the first instruction based on the third message, the method further comprises:
displaying, by the second electronic device, third prompt information, wherein the third prompt information is used to prompt that the second electronic device has executed the first instruction.

37. The method according to claim 30, wherein before the broadcasting a first offline message via a near field communication module, the method further comprises:
logging in to, by the second electronic device, a first account of a first application; and
establishing, by the second electronic device, a binding relationship with the first electronic device based on the first account of the first application.

38. An electronic device, comprising a memory and a processor, wherein the memory and the processor are electrically coupled, the memory is configured to store program instructions, and the processor is configured to invoke all or some of the program instructions stored in the memory, to perform the method according to any one of claims 1 to 21, claims 22 to 29, or claims 29 to 37.

39. A computer storage medium, comprising computer instructions, wherein when the computer instructions are run on an electronic device, the electronic device is enabled to perform the method according to any one of claims 1 to 21, claims 22 to 29, or claims 29 to 37.
